(19) Europäisches Patentamt
European Patent Office
Office européen des brevets

(11) **EP 3 384 981 B1**

(12) **EUROPÄISCHE PATENTSCHRIFT**

(45) Veröffentlichungstag und Bekanntmachung des Hinweises auf die Patenterteilung:
**06.03.2024 Patentblatt 2024/10**

(21) Anmeldenummer: **17000601.9**

(22) Anmeldetag: **07.04.2017**

(51) Internationale Patentklassifikation (IPC):
**B01J 8/06** *(2006.01)* **B01J 19/24** *(2006.01)*
**C10G 9/36** *(2006.01)* **F28D 7/00** *(2006.01)*

(52) Gemeinsame Patentklassifikation (CPC):
**F28F 1/40; B01J 19/2415; B01J 19/2455;**
**C10G 9/36;** F28D 7/06; F28D 7/16;
F28D 2021/0075

(54) **ROHR UND VORRICHTUNG ZUM THERMISCHEN SPALTEN VON KOHLENWASSERSTOFFEN**

TUBE AND DEVICE FOR THE THERMAL SPLITTING OF HYDROCARBONS

TUYAU ET DISPOSITIF DESTINÉS À LA SÉPARATION THERMIQUE D'HYDROCARBURES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.10.2018 Patentblatt 2018/41**

(73) Patentinhaber: **Schmidt + Clemens GmbH + Co. KG**
**51789 Lindlar (DE)**

(72) Erfinder:
• **Heyland, Steffen Alexander**
**51491 Overath (DE)**
• **Jakobi, Dietlinde**
**50733 Köln (DE)**
• **Weigandt, Jörg Dietmar**
**41564 Kaarst (DE)**

(74) Vertreter: **König Szynka Tilmann von Renesse Patentanwälte Partnerschaft mbB Düsseldorf Mönchenwerther Straße 11 40545 Düsseldorf (DE)**

(56) Entgegenhaltungen:
| | |
|---|---|
| EP-A1- 0 980 729 | EP-A2- 0 218 545 |
| EP-A2- 1 515 075 | WO-A1-02/42510 |
| WO-A1-98/56872 | WO-A1-2008/033193 |
| DE-A1- 10 233 961 | DE-U1-202004 016 252 |
| FR-A1- 2 410 238 | GB-A- 969 796 |
| JP-A- H11 199 876 | US-A- 5 016 460 |
| US-A- 5 409 675 | US-A1- 2003 019 533 |
| US-A1- 2004 147 794 | US-A1- 2005 131 263 |
| US-A1- 2014 060 586 | US-A1- 2014 257 001 |

Bemerkungen:
Die Akte enthält technische Angaben, die nach dem Eingang der Anmeldung eingereicht wurden und die nicht in dieser Patentschrift enthalten sind.

**Beschreibung**

Die Erfindung bezieht sich auf ein Rohr zum thermischen Spalten von Kohlenwasserstoffen in Anwesenheit von Dampf, bei dem das Einsatzgemisch durch außenbeheizte Rohre geführt wird. Ferner betrifft die Erfindung eine Vorrichtung zum thermischen Spalten von Kohlenwasserstoffen.

Für die Hochtemperaturpyrolyse von Kohlenwasserstoffen (Erdölderivate) haben sich Röhrenöfen bewährt, bei denen ein Kohlenwasserstoff/Wasserdampf-Gemisch bei Temperaturen über 750 °C durch Reihen aus einzelnen oder mäanderförmig angeordneten Rohren (Crackrohrschlangen) aus hitzebeständigen Nickel-Chrom-Eisen-Legierung mit hoher Oxidations- beziehungsweise Zunderbeständigkeit und hoher Aufkohlungsbeständigkeit geführt wird. Die Rohrschlangen bestehen aus vertikal oder horizontal verlaufenden geraden Rohrabschnitten, die über U-förmige Rohrbogen miteinander verbunden oder parallel zueinander angeordnet sind. Sie werden üblicherweise mit Hilfe von Seitenwand- und/oder auch mit Hilfe von Bodenbrennern beheizt und besitzen daher eine den Brennern zugekehrte sogenannte Sonnenseite sowie eine dem gegenüber um 90° versetzte, das heißt in Richtung der Rohrreihen verlaufende sogenannte Schattenseite. Dabei liegen die mittleren Rohrwandtemperaturen (TMT) teilweise über 1000 °C.

Die Lebensdauer der Crackrohre hängt sehr wesentlich von der Kriechbeständigkeit und der Aufkohlungsbeständigkeit sowie von der Verkokungsgeschwindigkeit des Rohrwerkstoffs ab. Maßgeblich für die Verkokungsgeschwindigkeit, das heißt für das Anwachsen einer Schicht von Kohlenstoffablagerungen (Pyrolysekoks) an der Rohrinnenwand sind neben der Art der eingesetzten Kohlenwasserstoffe die Spaltgastemperatur im Bereich der Innenwand und die sogenannte Crackschärfe, hinter der sich der Einfluss des Systemdrucks und der Verweilzeit im Rohrsystem auf die Äthylenausbeute verbirgt. Die Spaltschärfe wird anhand der mittleren Austrittstemperatur der Spaltgase (z. B. 850 °C) eingestellt. Je höher die Gastemperatur in der Nähe der Rohr-Innenwand über dieser Temperatur liegt, umso stärker wächst die Schicht des Pyrolysekokses, deren isolierende Wirkung die Rohrwandtemperatur weiter steigen lässt. Obgleich die als Rohrwerkstoff zur Verwendung kommenden Nickel-Chrom-Eisen-Legierung mit 0,4% Kohlenstoff über 25% Chrom und über 20% Nickel, beispielsweise 35% Chrom, 45% Nickel und gegebenenfalls 1% Niob eine hohe Aufkohlungsbeständigkeit besitzen, diffundiert der Kohlenstoff an Fehlstellen der Oxidschicht in die Rohrwandung und führt dort zu einer erheblichen Aufkohlung, die bis zu Kohlenstoffgehalten von 1% bis 3% in Wandtiefen von 0,5 mm bis 3 mm gehen kann. Verbunden damit ist eine erhebliche Versprödung des Rohrwerkstoffs mit der Gefahr einer Rissbildung bei thermischer Wechselbelastung insbesondere beim An- und Abfahren des Ofens.

Um die Kohlenstoffablagerungen (Verkokung) an der Rohrinnenwand abzubauen, ist es erforderlich, den Crackbetrieb von Zeit zu Zeit zu unterbrechen und den Pyrolysekoks mit Hilfe eines Dampf/Luft-Gemischs zu verbrennen. Dies erfordert eine Betriebsunterbrechung von bis zu 36 Stunden und beeinträchtigt daher erheblich die Wirtschaftlichkeit des Verfahrens.

Bekannt ist aus der britischen Patentschrift 969 796 und der europäischen Offenlegungsschrift 1 136 541 A1 auch die Verwendung von Crackrohren mit Innenrippen. Solche Innenrippen ergeben zwar eine um viele Prozent, beispielsweise um 10% größere Innenoberfläche und demzufolge einen besseren Wärmeübergang: sie sind aber auch mit dem Nachteil eines im Vergleich zu einem Glattrohr erheblich erhöhten Druckverlustes infolge Reibung an der vergrößerten Rohr-Innenoberfläche verbunden. Der höhere Druckverlust erfordert einen höheren Systemdruck, dadurch verändert sich zwangsläufig die Verweilzeit und verschlechtert sich die Ausbeute. Hinzu kommt, dass sich die bekannten Rohrwerkstoffe mit hohen Gehalten an Kohlenstoff und Chrom nicht mehr durch Kaltverformen, beispielsweise Kaltziehen profilieren lassen. Sie besitzen den Nachteil, dass sich ihre Verformbarkeit mit zunehmender Warmfestigkeit stark verringert. Dies hat dazu geführt, dass die im Hinblick auf die Äthylenausbeute erwünschten hohen Rohrwandtemperaturen von beispielsweise bis 1050 °C die Verwendung von Schleudergussrohren erfordern. Da sich Schleudergussrohre jedoch nur mit zylindrischer Wandung herstellen lassen, bedarf es besonderer Formgebungsverfahren, beispielsweise einer elektrolytisch abtragenden Bearbeitung oder eines formgebenden Schweißverfahrens, um Innen-Rohre herzustellen.

Bekannt ist schließlich aus der US-Patentschrift 5 950 718 auch ein ganzes Spektrum von Neigungswinkeln und auch Abständen zwischen den Innenrippen, ohne dass jedoch die Beschaffenheit der Rippen in Betracht gezogen wird.

Aus EP 1 525 289 B9 ist ein Rippenrohr zum thermischen Spalten von Kohlenwasserstoffen bekannt, das bezogen auf die Rohrachse geneigte, wendelförmig verlaufende Innenrippen aufweist.

Aus WO 2010/043375 A1 ist eine Nickel-Chrom-Eisen-Legierung mit hoher Oxidations- und Aufkohlungsbeständigkeit, Zeitstandsfestigkeit und Kriechbeständigkeit aus 0,4% bis 0,6% Kohlenstoff, 28% bis 33% Chrom, 15% bis 25% Eisen, 2% bis 6% Aluminium, bis 2% Silizium, bis 2% Mangan, bis 1,5% Niob, bis 1,5% Tantal, bis 1,0% Wolfram, bis 1,0% Titan, bis 1,0% Zirkonium, bis 0,5% Yttrium, bis 0,5% Cer, bis 0,5% Molybdän, bis 0,1% Stickstoff, Rest Nickel einschließlich erschmelzungsbedingter Verunreinigungen bekannt.

Vor diesem Hintergrund liegt der Erfindung die Aufgabe zugrunde, die Wirtschaftlichkeit des thermischen Spaltens von Kohlenwasserstoffen in Röhrenöfen mit außenbeheizten Rohren zu verbessern.

Diese Aufgabe wird durch die Gegenstände der Ansprüche 1, 2, 9 und 10 gelöst. Vorteilhafte Ausführungsformen sind in den Unteransprüchen und der hiernach folgenden Beschreibung wiedergegeben.

Es wurde erkannt, dass bei einem Rohr mit den Merkmalen des Oberbegriffs des Anspruchs 1 eine Beziehung zwischen den das Rohr charakterisierenden Merkmalen, nämlich

- der Anzahl $N_T$ der in die Innenoberfläche des Rohres eingebrachten, sich wendelförmig um die Längsachse entlang der Innenoberfläche erstreckende Nuten,
- dem Durchmesser der Innenoberfläche, in die die Nuten eingebracht wurden, in einem Querschnitt senkrecht zur Längsachse,
- dem Radius $r_2$ des Nutgrunds der in dem Querschnitt senkrecht zur Längsachse in ihrem Nutgrund jeweils die Form eine Kreisbogens aufweisenden Nuten und
- der Nuttiefe TT der Nuten, die in dem Querschnitt senkrecht zur Längsachse jeweils dem kleinsten Abstand zwischen dem Kreis mit dem Durchmesser Di, auf dem die Innenoberfläche liegt und dessen Mittelpunkt auf der Längsachse liegt, und dem entferntesten Punkt des Nutgrunds der Nut von der Längsachse entspricht,

besteht, bei deren Berücksichtigung die Wirtschaftlichkeit des thermischen Spaltens von Kohlenwasserstoffen in Röhrenöfen mit außenbeheizten Rohren verbessert werden kann.

Es wurde nämlich erkannt, dass sich ein auf Wärmeübergangs-Überlegungen basierender Kennwert erarbeiten lässt, der sich auf zwei unterschiedlichen, aber jeweils allein von den vorstehend beschriebenen, das Rohr charakterisierenden Merkmalen abhängenden Wegen berechnen lässt.

Nach einer ersten Wärmeübergangs-Überlegung lässt sich dieser Kennwert als

$$P1 * |D_{Äqv}|^2 + P2 * |D_{Äqv}| + P3$$

ausdrücken, mit den Konstanten P1, P2 und P3 sowie dem Zahlenwert $|D_{Äqv}|$ des von dem in mm gemessenen Innendurchmesser Di abhängigen Äquivalenzdurchmessers $D_{Äqv}$.

Gute Ergebnisse werden erreicht, wenn als Konstante P1 eine Zahl aus dem beanspruchten Bereich von -0,2 bis -0,3 gewählt wird. In einer bevorzugten Ausführungsform wird die Konstante P1 aus einem Bereich von -0,25 bis -0,295, insbesondere bevorzugt aus einem Bereich von -0,287 bis -0,2655 ausgewählt. Insbesondere bevorzugt ist die Konstante P1 gleich -0,287 oder -0,2655.

Gute Ergebnisse werden erreicht, wenn als Konstante P2 eine Zahl aus dem beanspruchten Bereich von 310 bis 315 gewählt wird. In einer bevorzugten Ausführungsform wird die Konstante P2 aus einem Bereich von 310 bis 312, insbesondere bevorzugt aus einem Bereich von 310,42 bis 311,31 ausgewählt. Insbesondere bevorzugt ist die Konstante P2 gleich 310,42 oder 311,31.

Gute Ergebnisse werden erreicht, wenn als Konstante P3 eine Zahl aus dem beanspruchten Bereich von 200 bis 1500 gewählt wird. In einer bevorzugten Ausführungsform wird die Konstante P3 aus einem Bereich von 230 bis 1400, insbesondere bevorzugt aus einem Bereich von 261,21 bis 1076 ausgewählt. Insbesondere bevorzugt ist die Konstante P3 gleich 261,21 oder 1076.

Der für die Gestaltung des Rohrs gemäß der Erfindung eingesetzte Kennwert wird in der vorgenannten Beziehung in Abhängigkeit des Zahlenwerts $|D_{Äqv}|$ des von dem in mm gemessenen Innendurchmesser Di abhängigen Äquivalenzdurchmessers $D_{Äqv}$ ausgedrückt. Unter dem Begriff "Zahlenwert" wird in diesem Kontext und in den übrigen Unterlagen die dimensionslose Zahl eines sich aus dem Zahlenwert und der Maßeinheit zusammensetzenden Werts einer physikalischen Größe verstanden. Eine physikalische Größe ist eine quantitative bestimmbare Eigenschaft eines physikalischen Objektes, Vorgangs oder Zustands. Ihr Wert (Größenwert) wird als Produkt aus einem Zahlenwert (der Maßzahl) und einer Maßeinheit angegeben. Da die für die Gestaltung des Rohrs gemäß der Erfindung eingesetzten Beziehungen dimensionslos sind, wird auf den Zahlenwert der physikalischen Größen zurückgegriffen. Um dies zu verdeutlichen, wird in der Beschreibung und den Ansprüchen der Zahlenwert einer Größe mit der sonst häufig auf für die Darstellung eines Betrags verwendeten Nomenklatur dargestellt, beispielsweise als $|D_{Äqv}|$. Die Darstellung einer Variablen zwischen zwei horizontalen Strichen, wie beispielsweise $|D_{Äqv}|$ wird im Kontext dieser Beschreibung und der Ansprüche als Darstellung des Zahlenwertes des durch die Variable ausgedrückten Werts (Größenwerts) einer physikalischen Größe verstanden. Der Zahlenwert $|Di|$ eines in mm gemessenen Durchmessers Di von 70 mm ist beispielsweise die Zahl 70.

Der für die Gestaltung des Rohrs gemäß der Erfindung eingesetzte Kennwert wird in der vorgenannten Beziehung in Abhängigkeit des Zahlenwerts $|D_{Äqv}|$ des von dem in mm gemessenen Innendurchmesser Di abhängigen Äquivalenzdurchmessers $D_{Äqv}$ ausgedrückt. Der Äquivalenzdurchmesser ist dabei der Durchmesser der Innenoberfläche, die ein glattes, nicht mit Nuten versehenes Rohr hätte, dessen Durchtrittsfläche der Durchtrittsfläche des erfindungsgemäßen Rohres entspricht. Als Durchtrittsfläche wird in einem Querschnitt senkrecht zur Längsachse die freie Fläche innerhalb des Rohres verstanden. Es hat sich gezeigt, das wärmeübergangsbezogene Überlegungen häufig einfacher an einem Glattrohr vollzogen werden können. Außerdem hat sich gezeigt, dass Anwender des erfindungsgemäßen Rohres häufig in ihren Vorrichtungen zum thermischen Spalten von Kohlenwasserstoffen in Anwesenheit von Dampf, bei dem das Einsatzgemisch durch außenbeheizte Rohre geführt wird, in der Vergangenheit mit Glattrohren gearbeitet haben. Für die Umstellung auf die erfindungsgemäßen Rohre ist es deshalb eingänglicher, wenn ein Vergleich zu dem durchtrittsflächenentsprechenden Glattrohr hergestellt werden kann.

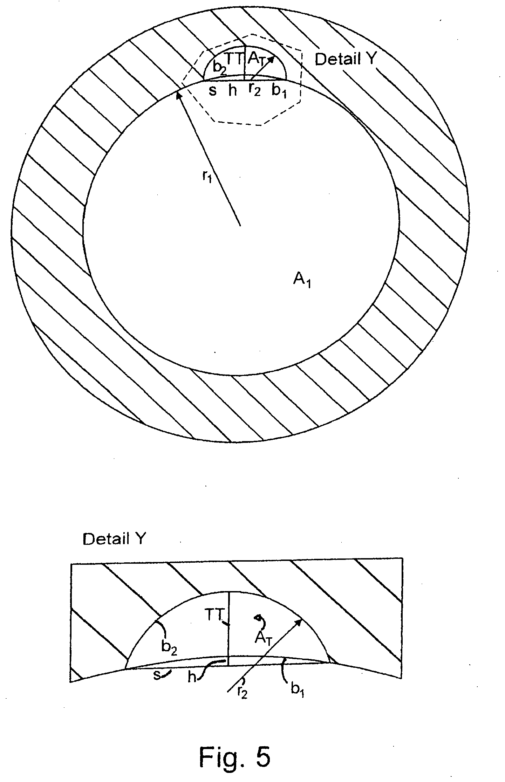

Der Äquivalenzdurchmesser $D_{\text{Äqv}}$ ergibt sich über die Beziehung $D_{\text{Äqv}} = 2\,r_{\text{Äqv}}$ aus dem Radius der Innenoberfläche, den ein glattes, nicht mit Nuten versehenes Rohr hätte, dessen Durchtrittsfläche der Durchtrittsfläche des erfindungsgemäßen Rohres entspricht. Setzt man die Durchtrittsfläche $A_{\text{Äqv}}$ des Glattrohres ($A_{\text{Äqv}} = \pi\,(r_{\text{Äqv}})^2$) der Durchtrittsfläche des erfindungsgemäßen Rohres gleich, so lässt sich die Durchtrittsfläche $A_{\text{Äqv}}$ des Glattrohres wie folgt in den das Rohr charakterisierenden Merkmalen ausdrücken (die verwendeten Symbole beziehen sich auf eine Nomenklatur, wie sie beispielhaft auch in der Fig. 5 erläutert wird):

$$|r_{\text{Äqv}}| = \left|\sqrt{\frac{|A_{\text{Äqv}}|}{\pi}}\right|$$

$$A_{\text{Äqv}} = A_1 + N_T \cdot A_T$$

$$A_1 = \pi \cdot |r_1|^2$$

$$A_T = \left[|r_2| \cdot \frac{b_2}{2} - \frac{s \cdot (|r_2| - (|TT| + h))}{2}\right] - \left[|r_1| \cdot \frac{b_1}{2} - \frac{s \cdot (|r_1| - h)}{2}\right]$$

$$b_1 = 2 \cdot |r_1| \cdot arcsin\left(\frac{\left|\sqrt{2 \cdot |r_1| \cdot \frac{2 \cdot |r_2| \cdot |TT| - |TT|^2}{2 \cdot (|r_1| - |r_2| + |TT|)} - \left(\frac{2 \cdot |r_2| \cdot |TT| - |TT|^2}{2 \cdot (|r_1| - |r_2| + |TT|)}\right)^2}\right|}{|r_1|}\right)$$

$$b_2 = 2 \cdot |r_2| \cdot arcsin\left(\frac{\left|\sqrt{2 \cdot |r_1| \cdot \frac{2 \cdot |r_2| \cdot |TT| - |TT|^2}{2 \cdot (|r_1| - |r_2| + |TT|)} - \left(\frac{2 \cdot |r_2| \cdot |TT| - |TT|^2}{2 \cdot (|r_1| - |r_2| + |TT|)}\right)^2}\right|}{|r_2|}\right)$$

$$s = 2 \cdot \left|\sqrt{2 \cdot |r_1| \cdot \frac{2 \cdot |r_2| \cdot |TT| - |TT|^2}{2 \cdot (|r_1| - |r_2| + |TT|)} - \left(\frac{2 \cdot |r_2| \cdot |TT| - |TT|^2}{2 \cdot (|r_1| - |r_2| + |TT|)}\right)^2}\right|$$

$$h = \frac{2 \cdot |r_2| \cdot |TT| - |TT|^2}{2 \cdot (|r_1| - |r_2| + |TT|)}$$

Die der Durchtrittsfläche $A_{\ddot{A}qv}$ des Glattrohres gleichgesetzte Durchtrittsfläche des erfindungsgemäßen Rohres setzt sich zusammen aus der durch die Innenoberfläche, in die die Nuten eingebracht wurden, begrenzten Durchtrittsfläche $A_1$, die sich aus dem Radius der Innenoberfläche leicht mit $A_1 = \pi r_1^2$ bestimmen lässt, und den zusätzlichen Flächen, die durch die Anzahl von $N_T$ Nuten mit ihren jeweiligen Durchtrittsflächen $A_T$ bereitgestellt werden.

Nach Auflösung der vorgenannten Beziehung lässt sich die der Durchtrittsfläche $A_{\ddot{A}qv}$ des Glattrohres gleichgesetzte Durchtrittsfläche des erfindungsgemäßen Rohres somit wie folgt ausschließlich mit den das Rohr charakterisierenden Merkmalen ausdrücken (nachstehend auch mit Formel (1) in Bezug genommen):

$$A_{\text{Äqv}} = \pi \cdot |r_1|^2 + N_T$$

$$\cdot \left[\left[ |r_2|^2 \right.\right.$$

$$\cdot \arcsin\left(\frac{\left|\sqrt{2 \cdot |r_1| \cdot \frac{2 \cdot |r_2| \cdot |TT| - |TT|^2}{2 \cdot (|r_1| - |r_2| + |TT|)} - \left(\frac{2 \cdot |r_2| \cdot |TT| - |TT|^2}{2 \cdot (|r_1| - |r_2| + |TT|)}\right)^2}\right|}{|r_2|}\right)$$

$$- \left|\sqrt{2 \cdot |r_1| \cdot \frac{2 \cdot |r_2| \cdot |TT| - |TT|^2}{2 \cdot (|r_1| - |r_2| + |TT|)} - \left(\frac{2 \cdot |r_2| \cdot |TT| - |TT|^2}{2 \cdot (|r_1| - |r_2| + |TT|)}\right)^2}\right|$$

$$\left. \cdot \left(|r_2| - \left(|TT| + \frac{2 \cdot |r_2| \cdot |TT| - |TT|^2}{2 \cdot (|r_1| - |r_2| + |TT|)}\right)\right)\right]$$

$$- \left[ |r_1|^2 \right.$$

$$\cdot \arcsin\left(\frac{\left|\sqrt{2 \cdot |r_1| \cdot \frac{2 \cdot |r_2| \cdot |TT| - |TT|^2}{2 \cdot (|r_1| - |r_2| + |TT|)} - \left(\frac{2 \cdot |r_2| \cdot |TT| - |TT|^2}{2 \cdot (|r_1| - |r_2| + |TT|)}\right)^2}\right|}{|r_1|}\right)$$

$$- \left|\sqrt{2 \cdot |r_1| \cdot \frac{2 \cdot |r_2| \cdot |TT| - |TT|^2}{2 \cdot (|r_1| - |r_2| + |TT|)} - \left(\frac{2 \cdot |r_2| \cdot |TT| - |TT|^2}{2 \cdot (|r_1| - |r_2| + |TT|)}\right)^2}\right|$$

$$\left.\left. \cdot \left(|r_1| - \frac{2 \cdot |r_2| \cdot |TT| - |TT|^2}{2 \cdot (|r_1| - |r_2| + |TT|)}\right)\right]\right]$$

Nach einer zweiten Wärmeübergangs-Überlegung lässt sich dieser Kennwert als

$$C1 + C2 * |TT| + C3 * VD + C4 * |D_{\text{Äqv}}|$$
$$+ (|TT| - C5) * (VD - C6) * C7$$
$$+ (|TT| - C5) * (|D_{\text{Äqv}}| - C8) * C9$$

oder unter Berücksichtigung weiterer Querverknüpfungen als

$$C1 + C2 * |TT| + C3 * VD + C4 * |D_{\text{Äqv}}|$$
$$+ (|TT| - C5) * (VD - C6) * C7$$
$$+ (|TT| - C5) * (|D_{\text{Äqv}}| - C8) * C9$$
$$+ (VD - C6) * (|D_{\text{Äqv}}| - C8) * C10$$
$$+ (|D_{\text{Äqv}}| - C8) * (|D_{\text{Äqv}}| - C8) * C11$$

in Abhängigkeit des Zahlenwerts $|D_{\text{Äqv}}|$ des von dem in mm gemessenen Innendurchmesser Di abhängigen Äquivalenzdurchmessers $D_{\text{Äqv}}$, der Anzahl $N_T$ der Nuten und dem Zahlenwert $|TT|$ der in mm gemessenen Nuttiefe TT der Nuten sowie die Nutdichte VD, die das Verhältnis der Nuten $N_T$ des Rohres im Verhältnis zu der Referenzzahl $N_{\text{ref}}$ der maximal auf der Innenoberfläche eines Rohres mit gleichem Äquivalenzdurchmesser $D_{\text{Äqv}}$ einbringbaren Nuten mit einer Nuttiefe TT = 1,3 mm in Prozent beschreibt, beschreiben. Die Konstanten werden dabei wie folgt festgelegt:

C1 = 1946,066  
C2 = 302,378  
C3 = -2,178  
C4 = 266,002  
C5 = 1,954  
C6 = 50,495  
C7 = -2,004  
C8 = 79,732  
C9 = -1,041  
C10 = 0,04631  
C11 = -0,26550  

Es wurde erkannt, dass wenn man diese beiden Berechnungsmethoden für den Kennwert gleichsetzt, die Beziehung

$$P1 * |D_{\text{Äqv}}|^2 + P2 * |D_{\text{Äqv}}| + P3$$
$$=$$
$$C1 + C2 * |TT| + C3 * VD + C4 * |D_{\text{Äqv}}|$$
$$+ (|TT| - C5) * (VD - C6) * C7$$
$$+ (|TT| - C5) * (|D_{\text{Äqv}}| - C8) * C9$$

oder unter Berücksichtigung weiterer Querverknüpfungen die Beziehung

$$P1 * |D_{\text{Äqv}}|^2 + P2 * |D_{\text{Äqv}}| + P3$$
$$=$$
$$C1 + C2 * |TT| + C3 * VD + C4 * |D_{\text{Äqv}}|$$
$$+ (|TT| - C5) * (VD - C6) * C7$$
$$+ (|TT| - C5) * (|D_{\text{Äqv}}| - C8) * C9$$
$$+ (VD - C6) * (|D_{\text{Äqv}}| - C8) * C10$$
$$+ (|D_{\text{Äqv}}| - C8) * (|D_{\text{Äqv}}| - C8) * C11$$

als Beschreibung der Beziehung der das Rohr charakterisierenden Merkmale untereinander erhält, die ein Rohr charakterisieren, das die Wirtschaftlichkeit des thermischen Spaltens von Kohlenwasserstoffen in Röhrenöfen mit außenbeheizten Rohren verbessert. Die konkret für das Rohr zu verwendenden, das Rohr charakterisierenden Merkmale, nämlich

- die Anzahl $N_T$ der in die Innenoberfläche des Rohres eingebrachten, sich wendelförmig um die Längsachse entlang der Innenoberfläche erstreckende Nuten,
- der Durchmesser der Innenoberfläche, in die die Nuten eingebracht wurden, in einem Querschnitt senkrecht zur Längsachse,
- der Radius $r_2$ des Nutgrunds der in dem Querschnitt senkrecht zur Längsachse in ihrem Nutgrund jeweils die Form eines Kreisbogens aufweisenden Nuten und
- die Nuttiefe TT der Nuten, die in dem Querschnitt senkrecht zur Längsachse jeweils dem kleinsten Abstand zwischen dem Kreis mit dem Durchmesser Di, auf dem die Innenoberfläche liegt und dessen Mittelpunkt auf der Längsachse liegt, und dem entferntesten Punkt des Nutgrunds der Nut von der Längsachse entspricht,

lassen sich mit einfachen Iterationen auf Grundlage dieser Beziehung ermitteln. Jede Paarung dieser vier das Rohr charakterisierenden Merkmale, die diese Beziehung erfüllt, steht für ein Rohr, das die Wirtschaftlichkeit des thermischen Spaltens von Kohlenwasserstoffen in Röhrenöfen mit außenbeheizten Rohren verbessert.

In der Praxis stellt sich heraus, dass sich der Aufwand für die Iteration in der Praxis sogar noch weiter reduziert. So ergeben sich Festlegungen für einzelne der vier das Rohr charakterisierenden Merkmale aus Steifigkeits- oder Herstellungsbeschränkungen oder auch daraus, dass das Rohr mit einer bestimmten Durchtrittsfläche ausgeführt werden muss.

Über ein sich aus der Anlage, in der das Rohr eingesetzt werden soll, ergebendes mögliches Maximalgewicht des einzelnen Rohrs kann sich eine Beschränkung für die maximale Wandstärke des Rohres ergeben, die wiederum aus Steifigkeitsgesichtspunkten eine Beschränkung für die maximal darstellbare Nuttiefe TT ergibt. Beschränkungen für die Wandstärke (und damit für die maximal darstellbare Nuttiefe) können sich auch aus anderen Aspekten, beispielsweise aus dem zu erreichenden Wärmeübergang, ergeben.

Steifigkeitserwägungen können auch eine Obergrenze für die Anzahl $N_T$ der in die Innenoberfläche des Rohres eingebrachten, sich wendelförmig um die Längsachse entlang der Innenoberfläche erstreckenden Nuten in Kombination mit der Nuttiefe TT ergeben. Werden zu viele, zu tiefe Nuten eingebracht, kann die Steifigkeit des Rohres zu stark geschwächt werden.

Auch können sich aus der Neigung des Rohres, beim thermischen Spalten von Kohlenwasserstoffen in Anwesenheit von Dampf, bei dem das Einsatzgemisch durch die außenbeheizten Rohre geführt wird, zu verkoken, Grenzen hinsichtlich des Radius $r_2$ des Kreisbogens des Nutgrunds in Kombination mit der Nuttiefe TT ergeben.

Ferner ergeben sich aus Herstellungsaspekten Beschränkungen, beispielsweise hinsichtlich des Radius $r_2$ des Kreisbogens des Nutgrunds in Kombination mit der Nuttiefe TT. Die Nuten können beispielsweise in einem Tieflochbohrverfahren, beispielsweise nach Art in der auf die Anmelderin angemeldeten, noch nicht veröffentlichten deutschen Patentanmeldung mit dem Aktenzeichen 10 2016 012 907.7 beschriebenen Weise hergestellt werden. Dabei kommen Wendeschneidplatten zur Herstellung der Nuten zum Einsatz. Diese Wendeschneidplatten sind in festgelegten Größen erhältlich. Greift man - was sich aus Wirtschaftlichkeitsgründen empfiehlt - auf die bereits erhältlichen Wendeschneidplatten zurück und verzichtet auf die - ebenfalls denkbare - Möglichkeit, Wendeschneidplatten spezifisch für die Herstellung des konkreten Rohres anfertigen zu lassen, so ergeben sich auch hieraus Festlegungen für den Radius $r_2$ des Kreisbogens des Nutgrunds in Kombination mit der Nuttiefe TT. Auch kann sich herausstellen, dass sich ein Rohr mit einer ersten Anzahl von Nuten rascher und deutlich kostengünstiger herstellen lässt, als ein Rohr mit einer zweiten, im Verhältnis zu ersten Anzahl größeren Anzahl von Nuten, so dass sich auch hieraus eine Beschränkung für die Anzahl der einzubringenden Nuten ergibt.

Auch können sich Beschränkungen dadurch ergeben, dass für das Rohr ein gewisser Durchsatz an Einsatzgemisch gefordert wird und mithin eine minimale Durchtrittsfläche des Rohrs.

Im Ergebnis werden sich vor dem Durchführen der Iteration bereits Bereiche ergeben, in denen einzelne der vier das Rohr charakterisierenden Merkmale nicht liegen können und diese bei der Iteration somit ausgeschlossen werden können.

Die vorstehend beschriebene Beziehung

$$C1 + C2 * |TT| + C3 * VD + C4 * |D_{Äqv}|$$
$$+ (|TT| - C5) * (VD - C6) * C7$$
$$+ (|TT| - C5) * (|D_{Äqv}| - C8) * C9$$

bzw. die weitere Querverknüpfungen berücksichtigende Beziehung

$$C1 + C2 * |TT| + C3 * VD + C4 * |D_{\text{Äqv}}|$$
$$+ (|TT| - C5) * (VD - C6) * C7$$
$$+ (|TT| - C5) * (|D_{\text{Äqv}}| - C8) * C9$$
$$+ (VD - C6) * (|D_{\text{Äqv}}| - C8) * C10$$
$$+ (|D_{\text{Äqv}}| - C8) * (|D_{\text{Äqv}}| - C8) * C11$$

greifen auf die Nutdichte VD zurück. Die Nutdichte VD ist das Verhältnis der Nuten $N_T$ des Rohres im Verhältnis zu der Referenzzahl $N_{ref}$ der maximal auf der Innenoberfläche eines Rohres mit gleichem Äquivalenzdurchmessers $D_{\text{Äqv}}$ einbringbaren Nuten mit einer Nuttiefe TT = 1,3 mm in Prozent.

Die erfindungsgemäße Erkenntnis lässt sich für Rohre mit einem breiten Spektrum von Durchmessern Di der Innenoberfläche, in die die Nuten eingebracht werden, anwenden. Offensichtlich lassen sich mehr Nuten mit festgelegtem Radius $r_2$ des Kreisbogens im Nutgrund der Nut und festgelegter Nuttiefe TT in ein Rohr mit größerem Durchmesser Di als in ein Rohr mit kleinerem Durchmesser Di einbringen. Um dennoch eine Beziehung für alle Durchmesser angeben zu können, wurde eine Normierung entwickelt, bei der nicht mehr die tatsächliche Anzahl der Nuten $N_T$ in die Beziehung eingesetzt wird, sondern die Nutdichte VD.

Die Nutdichte VD ergibt sich - da sie in Prozent ausgedrückt wird - aus der Beziehung

$$VD = N_T / N_{ref} * 100$$

Wobei die Referenzzahl $N_{ref}$ die größte natürliche Zahl ist, bei der die Beziehung

$$N_{ref} \leq \frac{\pi}{arcsin\left(\frac{\sqrt{2 \cdot |r_{\text{Äqv}}| \cdot \frac{2 \cdot |r_2| \cdot 1,3 - 1,3^2}{2 \cdot (|r_{\text{Äqv}}| - |r_2| + 1,3)} - \left(\frac{2 \cdot |r_2| \cdot 1,3 - 1,3^2}{2 \cdot (|r_{\text{Äqv}}| - |r_2| + 1,3)}\right)^2}}{|r_{\text{Äqv}}|}\right)}$$

erfüllt ist, wobei $A_{\text{Äqv}}$ der aus der Formel (1) berechnete Äquivalenzdurchmesser ist und wobei

$$|r_{\text{Äqv}}| = \left|\sqrt{\frac{|A_{\text{Äqv}}|}{\pi}}\right|$$

und bei der es zugleich möglich ist, ein iterativ zu bestimmendes $r_{Nref}$ zu finden, das unter Rückgriff auf den mit der Formel (1) berechneten Äquivalenzdurchmesser $A_{\text{Äqv}}$ die folgenden Beziehungen erfüllt (nachfolgend auch mit Formel (2) bezeichnet):

$$A_{\ddot{A}qv}$$

$$= \pi \cdot \left|r_{N_{ref}}\right|^2 + N_{ref}$$

$$\cdot \left[ \left[ |r_2|^2 \right. \right.$$

$$\cdot arcsin\left(\frac{\left|\sqrt{2 \cdot \left|r_{N_{ref}}\right| \cdot \frac{2 \cdot |r_2| \cdot 1,3 - 1,3^2}{2 \cdot \left(\left|r_{N_{ref}}\right| - |r_2| + 1,3\right)} - \left(\frac{2 \cdot |r_2| \cdot 1,3 - 1,3^2}{2 \cdot \left(\left|r_{N_{ref}}\right| - |r_2| + 1,3\right)}\right)^2}\right|}{|r_2|}\right)$$

$$- \left|\sqrt{2 \cdot \left|r_{N_{ref}}\right| \cdot \frac{2 \cdot |r_2| \cdot 1,3 - 1,3^2}{2 \cdot \left(\left|r_{N_{ref}}\right| - |r_2| + 1,3\right)} - \left(\frac{2 \cdot |r_2| \cdot 1,3 - 1,3^2}{2 \cdot \left(\left|r_{N_{ref}}\right| - |r_2| + 1,3\right)}\right)^2}\right|$$

$$\left. \cdot \left(|r_2| - \left(1,3 + \frac{2 \cdot |r_2| \cdot 1,3 - 1,3^2}{2 \cdot \left(\left|r_{N_{ref}}\right| - |r_2| + 1,3\right)}\right)\right) \right]$$

$$- \left[ \left|r_{N_{ref}}\right|^2 \right.$$

$$\cdot arcsin\left(\frac{\left|\sqrt{2 \cdot \left|r_{N_{ref}}\right| \cdot \frac{2 \cdot |r_2| \cdot 1,3 - 1,3^2}{2 \cdot \left(\left|r_{N_{ref}}\right| - |r_2| + 1,3\right)} - \left(\frac{2 \cdot |r_2| \cdot 1,3 - 1,3^2}{2 \cdot \left(\left|r_{N_{ref}}\right| - |r_2| + 1,3\right)}\right)^2}\right|}{|r_1|}\right)$$

$$- \left|\sqrt{2 \cdot \left|r_{N_{ref}}\right| \cdot \frac{2 \cdot |r_2| \cdot 1,3 - 1,3^2}{2 \cdot \left(\left|r_{N_{ref}}\right| - |r_2| + 1,3\right)} - \left(\frac{2 \cdot |r_2| \cdot 1,3 - 1,3^2}{2 \cdot \left(\left|r_{N_{ref}}\right| - |r_2| + 1,3\right)}\right)^2}\right|$$

$$\left. \left. \cdot \left(\left|r_{N_{ref}}\right| - \frac{2 \cdot |r_2| \cdot 1,3 - 1,3^2}{2 \cdot \left(\left|r_{N_{ref}}\right| - |r_2| + 1,3\right)}\right) \right] \right]$$

mit den Nebenbedingungen

$$\pi \geq N_{ref} \cdot arcsin\left(\frac{\sqrt{2 \cdot \left|r_{N_{ref}}\right| \cdot \frac{2 \cdot |r_2| \cdot 1,3 - 1,3^2}{2 \cdot \left(\left|r_{N_{ref}}\right| - |r_2| + 1,3\right)} - \left(\frac{2 \cdot |r_2| \cdot 1,3 - 1,3^2}{2 \cdot \left(\left|r_{N_{ref}}\right| - |r_2| + 1,3\right)}\right)^2}}{\left|r_{N_{ref}}\right|}\right), r_{N_{ref}} < r_{\ddot{A}qv}$$

$N_{ref}$ lässt sich leicht durch folgende Schrittabfolge bestimmen:

In einem ersten Schritt wird die rechte Seite der Beziehung

$$N_{ref} \leq \frac{\pi}{arcsin\left(\frac{\sqrt{2 \cdot \left|r_{\ddot{A}qv}\right| \cdot \frac{2 \cdot |r_2| \cdot 1,3 - 1,3^2}{2 \cdot \left(\left|r_{\ddot{A}qv}\right| - |r_2| + 1,3\right)} - \left(\frac{2 \cdot |r_2| \cdot 1,3 - 1,3^2}{2 \cdot \left(\left|r_{\ddot{A}qv}\right| - |r_2| + 1,3\right)}\right)^2}}{\left|r_{\ddot{A}qv}\right|}\right)}$$

mit den Werten des Rohres ausrechnet, zu dem es zu prüfen gilt, ob es die erfindungsgemäßen Vorteile realisiert. Da $N_{ref}$ eine natürlich Zahl sein muß, wird die natürlich Zahl genommen, die dem errechneten Wert entspricht, wenn der errechnete Wert eine natürliche Zahl ist oder die nächst kleinere natürliche Zahl zu dem errechneten Wert. Als Beispiel sei hier ein Rohr mit Di = 60 mm, TT = 2,05 mm, $r_2$ = 8mm und $N_T$ = 8 genommen. Damit ergibt sich für $N_{ref} \leq 19,4967769$. Damit wir $N_{ref}$ in dem ersten Schritt als 19 angenommen.

In einem zweiten Schritt wird geprüft, ob sich mit dem im ersten Schritt gefundenen $N_{ref}$ ein $r_{Nref}$ finden lässt, mit dem unter Rückgriff auf den mit der Formel (1) berechneten Äquivalenzdurchmesser $A_{\ddot{A}qv}$ die Formel (2) erfüllt werden kann, ohne die Nebenbedingung

$$\pi \geq N_{ref} \cdot arcsin\left(\frac{\sqrt{2 \cdot \left|r_{N_{ref}}\right| \cdot \frac{2 \cdot |r_2| \cdot 1,3 - 1,3^2}{2 \cdot \left(\left|r_{N_{ref}}\right| - |r_2| + 1,3\right)} - \left(\frac{2 \cdot |r_2| \cdot 1,3 - 1,3^2}{2 \cdot \left(\left|r_{N_{ref}}\right| - |r_2| + 1,3\right)}\right)^2}}{\left|r_{N_{ref}}\right|}\right), r_{N_{ref}} < r_{\ddot{A}qv}$$

zu verletzen. $A_{\ddot{A}qv}$ wird mit den Werten des Rohres ausgerechnet, zu dem es zu prüfen gilt, ob es die erfindungsgemäßen Vorteile realisiert, mit der Formel (1) berechnet. Bei den vorgenannten Beispielswerten (Di = 60 mm, TT = 2,05 mm, $r_2$ = 8 mm und $N_T$ = 8) ergibt sich ein $A_{\ddot{A}qv}$ von 2963,77397 mm$^2$ bei den genannten Beispielswerten. Mithin wird im zweiten Schritt der Suche nach $N_{ref}$ geprüft, ob sich mit dem im ersten Schritt gefunden $N_{ref}$ ein $r_{Nref}$ finden lässt, dass mit dem so errechneten $A_{\ddot{A}qv}$ die Formel (2) erfüllt und zugleich die genannten Nebenbedingungen erfüllt werden.

Diese Iteration lässt sich leicht mit einem Tabellenprogramm, beispielsweise dem Programm Microsoft® Excel und der in solchen Tabellenprogrammen vorgesehenen Zielwertsuche durchführen. Man nimmt eine zunächst leere erste Zelle, die nachher bei der Funktion der Zielwertsuche als "Veränderbare Zelle" genommen wird. Diese Zelle füllt man mit einem beliebigen Zahlenwert, beispielsweise $|r_1|$. Dann gibt man in eine zweite Zelle die vorstehend genannte Gleichung für $A_{\ddot{A}qv}$, die $A_{\ddot{A}qv}$ in $r_{Nref}$ ausdrückt, wobei für $r_{Nref}$ auf die mit einem beliebigen Zahlenwert, beispielsweise $|r_1|$ gefüllte erste Zelle verwiesen wird und der Wert für $r_2$ aus den Kenndaten des Rohres genommen wird, zu dem es zu prüfen gilt, ob es die erfindungsgemäßen Vorteile realisiert.

In einer dritten Zelle gibt man die Gleichung "= $A_{\ddot{A}qv}$ - Wert der zweiten Zelle" ein, wobei hier das $A_{\ddot{A}qv}$ mit der Formel (1) berechnet wird.

In einer vierten Zelle gibt man die Gleichung ein

$$= \pi - N_{ref}$$

$$\cdot \arcsin \left( \left| \sqrt{2 \cdot |r_{N_{ref}}| \cdot \frac{2 \cdot |r_2| \cdot 1{,}3 - 1{,}3^2}{2 \cdot \left( |r_{N_{ref}}| - |r_2| + 1{,}3 \right)} - \left( \frac{2 \cdot |r_2| \cdot 1{,}3 - 1{,}3^2}{2 \cdot \left( |r_{N_{ref}}| - |r_2| + 1{,}3 \right)} \right)^2 } \right| \middle/ |r_{N_{ref}}| \right)$$

Wobei $r_{Nref}$ auf die mit einem beliebigen Zahlenwert, beispielsweise $|r_1|$ gefüllte erste Zelle verweist und der Wert für $r_2$ aus den Kenndaten des Rohres genommen wird, zu dem es zu prüfen gilt, ob es die erfindungsgemäßen Vorteile realisiert. In einer fünften Zelle fügt man eine WENN-DANN-Prüfung (If-then-test) ein, die das Wort "FALSCH" ausgibt, wenn der Wert in der vierten Zelle kleiner Null ist und sonst das Wort "WAHR" ausgibt.

Mit dem so vorbereiteten Tabellenblatt kann man dann die in dem Tabellenprogramm vorgesehene Zielwertsuche starten. Die Zielwertsuche fragt, welches die Zielzelle ist. Hierfür gibt man die dritte Zelle an. Ferner fragt die Zielwertsuche nach dem Zielwert. Diesen gibt man als 0 (null) an. Ferner fragt die Zielwertsuche nach der veränderbaren Zelle. Hierfür gibt man die erste Zelle an. Die Zielwertsuche wird zu einem Wert in der ersten Zelle führen. Ist bei diesem Wert der Inhalt der fünften Zelle "WAHR", dann ist das im ersten Schritt gefunden $N_{ref}$ das zu verwendende $N_{ref}$. Ist der Wert der fünften Zelle "FALSCH", so reduziert man das im ersten Schritt gefundene $N_{ref}$ um die Zahl 1 und bildet damit ein neues $N_{ref}$, mit dem man den zweiten Schritt erneut durchführt. In der Regel ergibt dies bereits am Ende der Zielwertsuche einen Wert in der ersten Zelle, zu dem auch in der fünften Zelle das Wort "WAHR" steht, so dass das so gewonnene neue $N_{ref}$ das zu verwendende $N_{ref}$ ist. Anderfalls reduziert man das neue $N_{ref}$ abermals um die Zahl 1 und führt den zweiten Schritt abermals durch. Es hat sich gezeigt, dass selbst wenn eine solche Zielwertsuche in einem Tabellenprogramm in den hinteren Nachkommastellen nicht perfekt ist, dies auch aufgrund der übrigen Toleranzen keinen merklichen Einfluss auf die Auslegung hat.

Mit dem so gefundenen $N_{ref}$ lässt sich für das Rohr, zu dem es zu prüfen gilt, ob es die erfindungsgemäßen Vorteile realisiert, die Nutdichte VD aus $VD = 100 * N_T / N_{ref}$ bestimmen. Ergibt sich mit den so gewonnen Werten, dass

$$P1 * |D_{\ddot{A}qv}|^2 + P2 * |D_{\ddot{A}qv}| + P3$$
$$=$$
$$C1 + C2 * |TT| + C3 * VD + C4 * |D_{\ddot{A}qv}|$$
$$+ (|TT| - C5) * (VD - C6) * C7$$
$$+ (|TT| - C5) * (|D_{\ddot{A}qv}| - C8) * C9$$

oder unter Berücksichtigung weiterer Querverknüpfungen dass

$$P1 * |D_{\ddot{A}qv}|^2 + P2 * |D_{\ddot{A}qv}| + P3$$
$$=$$
$$C1 + C2 * |TT| + C3 * VD + C4 * |D_{\ddot{A}qv}|$$
$$+ (|TT| - C5) * (VD - C6) * C7$$
$$+ (|TT| - C5) * (|D_{\ddot{A}qv}| - C8) * C9$$
$$+ (VD - C6) * (|D_{\ddot{A}qv}| - C8) * C10$$
$$+ (|D_{\ddot{A}qv}| - C8) * (|D_{\ddot{A}qv}| - C8) * C11$$

dann liegt die Bestätigung vor, dass das Rohr mit diesen der Berechnung zugrunde gelegten vier das Rohr charakterisierenden Merkmale ($N_T$, Di, $r_2$, TT) die Wirtschaftlichkeit des thermischen Spaltens von Kohlenwasserstoffen in Röhrenöfen mit außenbeheizten Rohren verbessert.

Bei den oben genannten Beispielswerten (Di = 60 mm, TT = 2,05 mm, $r_2$ = 8 mm und $N_T$ = 8) ergibt sich im ersten Schritt ein $N_{ref}$ von 19. Im zweiten Schritt ergibt die Zielwertsuche mit $N_{ref}$ von 19 ein $r_{Nref}$ von 29,4509992. In der vierten Zelle ergibt sich jedoch der Wert -0,07096658, so dass in der fünften Zelle das Wort "FALSCH" ausgeworfen wird. Reduziert man das $N_{ref}$ von 19 um die Zahl 1 auf 18 und führt den zweiten Schritt erneut durch, so ergibt die Zielwertsuche mit $N_{ref}$ von 18 ein $r_{Nref}$ von 29,5192908. In der vierten Zelle ergibt sich jedoch der Wert 0,10620948, so dass in der fünften Zelle das Wort "WAHR" ausgeworfen wird. $N_{ref}$ = 18 wäre bei der weiteren Prüfung des Rohrs auf Zugehörigkeit zu der Erfindung für die Berechnung der Nutdichte VD zu verwenden.

Das erfindungsgemäße Rohr erstreckt sich entlang einer Längsachse und weist in seine Innenoberfläche eingebrachte Nuten auf. Die Anzahl der vorhandenen Nuten wird durch die Variable $N_T$ ausgedrückt. Die Nuten erstrecken sich wendelförmig um die Längsachse entlang der Innenoberfläche des Rohres. In einer bevorzugten Ausführungsform sind die Nuten gleichmäßig über den Umfang des Rohres verteilt. Damit ist gemeint, dass in einem Querschnitt senkrecht zur Längsachse für alle Nuten der Abstand in Umfangsrichtung zwischen zwei benachbart angeordneten Nuten für alle Nuten gleich ist.

Die Nuttiefe wird als der Abstand des tiefsten Punkts der Nut von der Innenoberfläche verstanden. Damit ist in einem Querschnitt senkrecht zur Längsachse der kürzeste Abstand zwischen dem in Radialrichtung von der Längsachse gesehen entferntesten Punkt (tiefsten Punkt) der Nut und einem Innenoberflächenkreis um die Längsachse gemeint, auf dem die am weitesten nach innen angeordneten, zwischen den Nuten verbleibenden Teile der Innenoberfläche liegen. Erfindungsgemäß ist vorgesehen, dass die Innenoberfläche des Rohrs zylinderförmig ist und in diese zylinderförmige Innenoberfläche die Nuten eingebracht werden. Zwischen den Nuten verbleiben dann Teile der Innenoberfläche, die Teile eines Zylinders bilden. Der Innenoberflächenkreis, auf dem die am weitesten nach innen angeordneten Teile der Innenoberfläche liegen, ist - da in dieser Ausführungsform alle verbleibenden Teile der Innenoberfläche gleich weit nach innen angeordnet sind - der Kreis in dem Querschnitt, auf dem die verbleibenden Teile der zylinderförmigen Innenoberfläche liegen.

Insbesondere wenn sich bei einer solchen Ausführungsform die Krümmung der Oberfläche der Nut von einer konkaven Krümmung im Nutgrund (einem Kreisbogen im Nutzgrund) in eine konvexe Krümmung der Oberfläche der Nut im Bereich des Nutmunds ändert, können derartige Ausführungsformen so wirken, als würden sich in Umfangsrichtung an Nuten (wobei damit dann der konvex gekrümmte Bereich der Nut gemeint wäre) zwischen den Nuten angeordnete Rippen (wobei damit dann der konkav gekrümmte Bereich der Nut gemeint ist) anschließen und die die Nut (besser: den konkav gekrümmten Nutgrund) begrenzende Wandung in eine Außenoberfläche der Rippe übergeht. Der Innenoberflächenkreis, auf dem ja die am weitesten nach innen angeordneten Teile der Innenoberfläche liegen, ist bei solchen Ausführungsformen der Kreis in dem Querschnitt, auf dem in diesem Querschnitt die Scheitelpunkte der "Rippen" liegen. Die Nuttiefe wird in der erfindungsgemäß gefundenen, das Rohr charakterisierenden Beziehung durch die Variable TT ausgedrückt.

Die Nuten haben in einer bevorzugten Ausführungsform in einem Querschnitt senkrecht zur Längsachse zumindest im Nutgrund einen gerundeten Querschnitt, der sich vorzugsweise durch einen Kreisbogen approximieren lässt oder einen Kreisbogen entspricht. Im Bereich des Nutmunds kann sich die Querschnittsgeometrie der Nut in einer bevorzugten Ausführungsform aufweiten, insbesondere durch eine Änderung von einer konkaven Querschnittsgeometrie im Nutgrund zu einer konvexen Querschnittsgeometrie im Bereich des Nutmunds. In einer alternativen Ausführungsform lässt sich in einem Querschnitt senkrecht zur Längsachse die Querschnittsgeometrie der gesamten Nut durch einen Kreisbogen approximieren oder entspricht einem Kreisbogen. Ebenso sind Ausführungsformen denkbar, bei denen die Nut in einem Querschnitt senkrecht zur Längsachse die Querschnittsgeometrie eines Teils eine Ellipse hat. In einer bevorzugten Ausführungsform bleibt die Form des Querschnitts einer Nut senkrecht zur Längsachse für alle Querschnitte senkrecht zur Längsachse gleich. In einer besonders bevorzugten Ausführungsform bleibt die Form und die Größe des Querschnitts einer Nut senkrecht zur Längsachse für alle Querschnitte senkrecht zur Längsachse gleich. In einer bevorzugten Ausführungsform haben alle Nuten des Rohrs in einem Querschnitt senkrecht zur Längsachse, vorzugsweise in allen Querschnitten senkrecht zur Längsachse die gleiche Form und insbesondere bevorzugt die gleiche Form und Größe. Haben die Nuten unterschiedliche Größen und insbesondere unterschiedliche Nuttiefen, so wird für die erfindungsgemäße, das Rohr charakterisierende Beziehung die Nuttiefe TT der tiefsten Nut verwendet.

In einer bevorzugten Ausführungsform ist ein Querschnitt des Rohres senkrecht zur Längsachse rotationssymmetrisch um die Längsachse. Damit ist gemeint, dass es zumindest einen Winkel zwischen 0° und 360° gibt, um den der Querschnitt des Rohres durch Drehung um die Längsachse auf sich selber abgebildet werden kann.

In einer bevorzugten Ausführungsform ist ein Querschnitt des Rohres senkrecht zur Längsachse punktsymmetrisch um den Punkt, den die Längsachse in diesem Querschnitt einnimmt.

In einer bevorzugten Ausführungsform ist ein Querschnitt des Rohres senkrecht zur Längsachse spiegelsymmetrisch um eine in diesem Querschnitt liegende, senkrecht zur Längsachse verlaufenden Achse.

Das Rohr hat in einem Querschnitt senkrecht zur Längsachse einen Innendurchmesser, der mit der Variable Di ausgedrückt wird. Der Innendurchmesser ist der Durchmesser des Innenoberflächenkreis, also des Kreis um die Längsachse, auf dem die am weitesten nach innen angeordneten, zwischen den Nuten verbleibenden Teile der Innenoberfläche liegen.

In einer bevorzugten Ausführungsform hat der Rohrquerschnitt auf der Innenseite einen Durchmesser Di in einem Bereich von 15 mm bis 280 mm, insbesondere bevorzugt von 15 mm bis 180 mm, insbesondere bevorzugt von 20 mm bis 150 mm und insbesondere bevorzugt von 30 mm bis 140 mm.

In einer bevorzugten Ausführungsform liegt die Nuttiefe TT in einem Bereich von 0,1 mm bis 10 mm, insbesondere bevorzugt von 1,0 mm bis 7 mm und ganz besonders bevorzugt von 1,0 mm bis 4 mm.

In einer bevorzugten Ausführungsform liegt die Anzahl der Nuten $N_T$ in einem Bereich von 1 bis 100, insbesondere bevorzugt von 2 bis 50 und ganz besonders bevorzugt von 2 bis 30.

In einer bevorzugten Ausführungsform liegt die Nutdichte VD in einem Bereich von 1% bis 347%, insbesondere bevorzugt von 2% bis 113% und ganz besonders bevorzugt von 10% bis 105%.

In einer bevorzugten Ausführungsform verlaufen die Nuten in einem Winkel von 20° bis 40°, vorzugsweise von 22,5° bis 32,5°, bezogen auf die Längsachse.

In einer bevorzugten Ausführungsform ist in einem Querschnitt senkrecht zur Längsachse das von einem zwischen zwei Nuten angeordneten Teil der Innenoberfläche eingenommene Kreisbogensegment auf dem Innenoberflächenkreis größer als 1% des von dem Nutmund zumindest einer der an diesen Teil der Innenoberfläche angrenzenden Nuten eingenommenen Kreisbogensegment auf dem Innenoberflächenkreis, insbesondere größer als 2%, insbesondere größer als 5%, insbesondere größer als 10%, insbesondere größer als 30%, insbesondere größer als 50%, insbesondere größer als 70%. In einer bevorzugten Ausführungsform ist in einem Querschnitt das von dem zwischen zwei Nuten angeordneten Teil der Innenoberfläche eingenommene Kreisbogensegment auf dem Innenoberflächenkreis gleich oder größer als das von dem Nutmund zumindest einer der an diesen Teil der Innenoberfläche angrenzenden Nuten eingenommenen Kreisbogensegment auf dem Innenoberflächenkreis.

Eine erfindungsgemäße Vorrichtung zum thermischen Spalten von Kohlenwasserstoffen in Anwesenheit von Dampf, bei dem das Einsatzgemisch durch außenbeheizte Rohre geführt wird, hat mindestens ein erfindungsgemäßes Rohr.

Bei dem erfindungsgemäßen Rohr wird das über den Rohrumfang zwischen Sonnen- und Schattenseite zwangsläufig unterschiedliche Wärmeangebot in der Rohrwandung und im Rohrinnern ausgeglichen und dabei die Wärme rasch nach innen zur Kernzone abgeführt. Damit verbunden ist eine Verringerung der Gefahr einer lokalen Überhitzung des Prozessgases an der Rohrwand und der dadurch verursachten Entstehung von Koks. Außerdem ist die thermische Beanspruchung des Rohrwerkstoffs infolge des Temperaturausgleichs zwischen Sonnen- und Schattenseite geringer, was zu einer Verlängerung der Lebensdauer führt. Schließlich kommt es bei dem erfindungsgemäßen Rohr auch zu einer Vergleichmäßigung der Temperatur über den Rohrquerschnitt mit der Folge einer besseren Olefinausbeute. Der Grund hierfür ist, dass es ohne den erfindungsgemäßen radialen Temperaturausgleich im Rohrinnern an der heißen Rohrwand zu einem Übercracken und in der Rohrmitte zu einem zu geringen Reaktionsumsatz kommen würde.

Das erfindungsgemäße Rohr lässt sich je nach Werkstoff beispielsweise aus einem Schleudergussrohr dadurch herstellen, dass die Enden eines Rohres mit achsparallelen Nuten gegeneinander verdreht werden, oder dass das Innenprofil durch Vorformen eines Schleudergussrohrs, beispielsweise durch Warmschmieden, Warmziehen oder Kaltverformen über ein Profilwerkzeug, beispielsweise einen fliegenden Dorn oder einer Dornstange mit einem dem Innenprofil des Rohrs entsprechenden Außenprofil erzeugt wird.

Schneidemaschinen zum Innenprofilieren von Rohren sind in verschiedenen Varianten beispielsweise aus der deutschen Patentschrift 195 23 280 bekannt. Diese Maschinen eignen sich auch zum Herstellen eines erfindungsgemäßen Rohrs.

Die Innenoberfläche des erfindungsgemäßen Rohrs sollte eine möglichst geringe Rauigkeit besitzen; sie kann daher geglättet, beispielsweise mechanisch poliert oder elektrolytisch egalisiert sein.

Als Rohrwerkstoff eignen sich für den Einsatz in Äthylenanlagen Nickel-Chrom-EisenLegierungen mit 0,1% bis 0,5% Kohlenstoff, 20% bis 35% Chrom, 20% bis 70% Nickel, bis 3% Silizium, bis 1% Niob, bis 5% Wolfram sowie Zusätzen von Hafnium, Titan, Seltenen Erden, oder Zirkonium, von jeweils bis 0,5% und bis 6% Aluminium.

Insbesondere bevorzugt wird für das Rohr eine Nickel-Chrom-Eisen-Legierung mit hoher Oxidations- und Aufkohlungsbeständigkeit, Zeitstandfestigkeit und Kriechbeständigkeit aus

0,05% bis 0,6% Kohlenstoff
20% bis 50% Chrom
5% bis 40% Eisen
bis 6% Aluminium
bis 2% Silizium
bis 2% Mangan
bis 1,5% Niob
bis 1,5% Tantal

bis 6,0% Wolfram
bis 1,0% Titan
bis 1,0% Zirkonium
bis 0,5% Yttrium
bis 0,5% Cer
bis 0,5% Molybdän
bis 0,1% Stickstoff

Rest Nickel einschließlich erschmelzungsbedingter Verunreinigungen verwendet.

Die nachfolgende Tabelle zeigt mögliche Ausführungsformen der Erfindung an, die der erfindungsgemäßen vorgeschlagenen Beziehung entsprechen. Dabei wird in einer Zeile für einen gewählten Innendurchmesser $D_{Äqv}$ eine Paarung $N_{TMax}$ und $TT_{min}$ und $VD_{max}$ für einen guten, aber im Verhältnis zu einer zweiten Paarung aus $N_{TMin}$ und $TT_{Max}$ und $VD_{min}$ geringeren Wärmeübergang angegeben. Zusätzlich zeigt die Tabelle einen mit einem Simulationsprogramm abgeschätzten Wärmeübergang ($H_{min}(D_{Äqv}, TT_{min}, VD_{Max})$ [Watt]) für den geringeren Wärmeübergang; $H_{max}(D_{Äqv}, TT_{max}, VD_{min})$ [Watt]) für den noch weiter verbesserten Wärmeübergang).

| Nr. | $D_{Äqv}$ | $N_{Tmax}$ | $V_{Dmax}$ | $TT_{min}$ | $H_{min}(D_{Äqv}, TT_{min}, VD_{max})$ [Watt] |
|---|---|---|---|---|---|
| 1 | 35 | 9 | 100 | 1.3 | 10831.95559 |
| 2 | 40 | 11 | 100 | 1.3 | 12288.96106 |
| 3 | 45 | 12 | 100 | 1.3 | 13732.69121 |
| 4 | 50 | 14 | 100 | 1.3 | 15163.14603 |
| 5 | 55 | 16 | 100 | 1.3 | 16580.32553 |
| 6 | 60 | 18 | 100 | 1.3 | 17984.2297 |
| 7 | 65 | 20 | 100 | 1.3 | 19374.85855 |
| 8 | 70 | 21 | 100 | 1.3 | 20752.21208 |
| 9 | 75 | 23 | 100 | 1.3 | 22116.29028 |
| 10 | 80 | 25 | 100 | 1.3 | 23467.09315 |
| 11 | 85 | 27 | 100 | 1.3 | 24804.62071 |
| 12 | 90 | 29 | 100 | 1.3 | 26128.87294 |
| 13 | 95 | 30 | 100 | 1.3 | 27439.84984 |
| 14 | 100 | 32 | 100 | 1.3 | 28737.55142 |
| 15 | 105 | 34 | 100 | 1.3 | 30021.97768 |
| 16 | 110 | 36 | 100 | 1.3 | 31293.12861 |
| 17 | 115 | 38 | 100 | 1.3 | 32551.00422 |
| 18 | 120 | 39 | 100 | 1.3 | 33795.6045 |
| 19 | 125 | 41 | 100 | 1.3 | 35026.92946 |
| 20 | 130 | 43 | 100 | 1.3 | 36244.9791 |
| 21 | 135 | 45 | 100 | 1.3 | 37449.75341 |
| 22 | 140 | 47 | 100 | 1.3 | 38641.25239 |
| 23 | 160 | 54 | 100 | 1.3 | 43274.4951 |
| 24 | 180 | 61 | 100 | 1.3 | 47695.33262 |
| 25 | 200 | 68 | 100 | 1.3 | 51903.76496 |
| 26 | 280 | 97 | 100 | 1.3 | 66613.44243 |

| Nr. | $D_{Äqv}$ | $NT_{min}$ | $VD_{min}$ | $TT_{max}$ | $H_{max}(D_{Äqv}, TT_{max}, VD_{min})$ [Watt] |
|---|---|---|---|---|---|
| 27 | 35 | 3 | 33.33333333 | 2.7 | 11564.65262 |
| 28 | 40 | 3 | 27.27272727 | 2.7 | 13032.35209 |
| 29 | 45 | 3 | 25 | 2.7 | 14463.96054 |
| 30 | 50 | 3 | 21.42857143 | 2.7 | 15887.80079 |
| 31 | 55 | 3 | 18.75 | 2.7 | 17292.40888 |
| 32 | 60 | 3 | 16.66666667 | 2.7 | 18679.77042 |
| 33 | 65 | 3 | 15 | 2.7 | 20051.07678 |
| 34 | 70 | 3 | 14.28571429 | 2.7 | 21404.40771 |
| 35 | 75 | 3 | 13.04347826 | 2.7 | 22746.18795 |
| 36 | 80 | 3 | 12 | 2.7 | 24073.38983 |
| 37 | 85 | 3 | 11.11111111 | 2.7 | 25386.30292 |
| 38 | 90 | 3 | 10.34482759 | 2.7 | 26685.1369 |
| 39 | 95 | 3 | 10 | 2.7 | 27969.09023 |
| 40 | 100 | 3 | 9.375 | 2.7 | 29240.37497 |
| 41 | 105 | 3 | 8.823529412 | 2.7 | 30497.91084 |
| 42 | 110 | 3 | 8.333333333 | 2.7 | 31741.77677 |
| 43 | 115 | 3 | 7.894736842 | 2.7 | 32972.03508 |
| 44 | 120 | 3 | 7.692307692 | 2.7 | 34188.38764 |
| 45 | 125 | 3 | 7.317073171 | 2.7 | 35391.6438 |
| 46 | 130 | 3 | 6.976744186 | 2.7 | 36581.40387 |
| 47 | 135 | 3 | 6.666666667 | 2.7 | 37757.6973 |
| 48 | 140 | 3 | 6.382978723 | 2.7 | 38920.54851 |
| 49 | 160 | 3 | 5.555555556 | 2.7 | 43437.89962 |
| 50 | 180 | 3 | 4.918032787 | 2.7 | 47741.49693 |
| 51 | 200 | 3 | 4.411764706 | 2.7 | 51831.75693 |
| 52 | 280 | 3 | 3.092783505 | 2.7 | 66063.32146 |

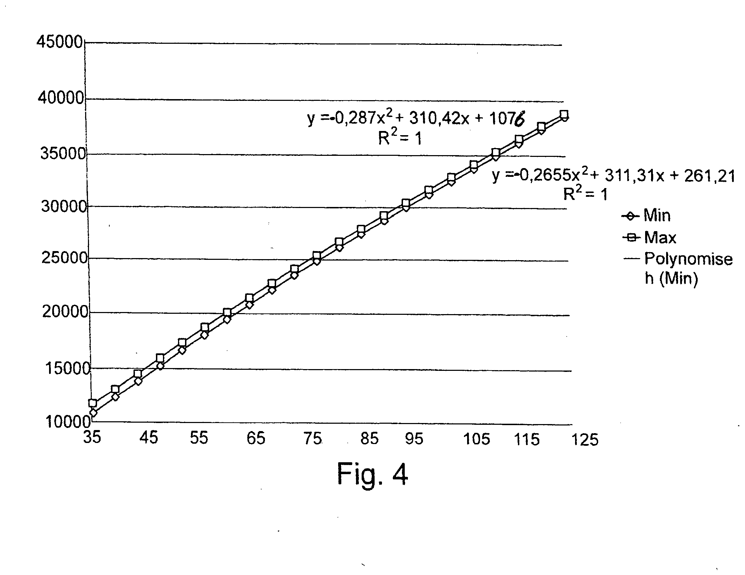

Es wurde erkannt, dass sich der zu erwartende Wärmeübergang sowohl für den guten, aber im Verhältnis zu dem weiter optimierten etwas geringeren Wert ($H_{min}(D_{Äqv}, TT_{min}, VD_{Max})$ [Watt]) als auch für den weiter optimierten Wert $H_{Max}(D_{Äqv}, TT_{max}, VD_{min})$ [Watt]) unmittelbar proportional zum Innendurchmesser auftragen lässt, wie in der Fig. 4 gezeigt. Die nachstehende Tabelle zeigt die Werte der verschiedenen Variablen der erfindungsgemäß eingesetzten Beziehungen für die einzelnen Rohre. Der Kreisbogen im Nutgrund hatte einen Radius $r_2$ von 8 mm.

| Nr. | $A_{Äqv}$ | $A_1$ | $A_T$ | $r_1$ | $b_1$ | $b_2$ | s | h |
|---|---|---|---|---|---|---|---|---|
| 1 | 962.113 | 870.691 | 10.158 | 16.648 | 11.365 | 12.331 | 11.146 | 0.961 |
| 2 | 1256.637 | 1149.789 | 9.713 | 19.131 | 10.883 | 11.77 | 10.737 | 0.769 |
| 3 | 1590.431 | 1477.643 | 9.399 | 21.688 | 10.543 | 11.374 | 10.44 | 0.638 |
| 4 | 1963.495 | 1835.026 | 9.176 | 24.168 | 10.303 | 11.093 | 10.226 | 0.547 |
| 5 | 2375.829 | 2231.74 | 9.006 | 26.653 | 10.12 | 10.878 | 10.059 | 0.479 |
| 6 | 2827.433 | 2667.765 | 8.87 | 29.141 | 9.975 | 10.708 | 9.927 | 0.426 |

(fortgesetzt)

| Nr. | $A_{\text{Äqv}}$ | $A_1$ | $A_T$ | $r_1$ | $b_1$ | $b_2$ | s | h |
|---|---|---|---|---|---|---|---|---|
| 7 | 3318.307 | 3143.09 | 8.761 | 31.63 | 9.858 | 10.57 | 9.818 | 0.383 |
| 8 | 3848.451 | 3666.405 | 8.669 | 34.162 | 9.76 | 10.455 | 9.727 | 0.348 |
| 9 | 4417.865 | 4220.229 | 8.593 | 36.652 | 9.679 | 10.359 | 9.65 | 0.319 |
| 10 | 5026.548 | 4813.348 | 8.528 | 39.143 | 9.609 | 10.278 | 9.585 | 0.295 |
| 11 | 5674.502 | 5445.756 | 8.472 | 41.635 | 9.55 | 10.207 | 9.529 | 0.274 |
| 12 | 6361.725 | 6117.451 | 8.423 | 44.128 | 9.498 | 10.146 | 9.48 | 0.255 |
| 13 | 7088.218 | 6836.823 | 8.38 | 46.65 | 9.452 | 10.092 | 9.436 | 0.239 |
| 14 | 7853.982 | 7587.043 | 8.342 | 49.143 | 9.411 | 10.044 | 9.397 | 0.225 |
| 15 | 8659.015 | 8376.545 | 8.308 | 51.637 | 9.375 | 10.001 | 9.362 | 0.213 |
| 16 | 9503.318 | 9205.329 | 8.277 | 54.131 | 9.343 | 9.963 | 9.331 | 0.201 |
| 17 | 10386.891 | 10073.393 | 8.25 | 56.626 | 9.314 | 9.928 | 9.303 | 0.191 |
| 18 | 11309.734 | 10988.968 | 8.225 | 59.143 | 9.287 | 9.897 | 9.278 | 0.182 |
| 19 | 12271.846 | 11935.564 | 8.202 | 61.638 | 9.263 | 9.868 | 9.254 | 0.174 |
| 20 | 13273.229 | 12921.438 | 8.181 | 64.133 | 9.241 | 9.842 | 9.233 | 0.166 |
| 21 | 14313.882 | 13946.589 | 8.162 | 66.628 | 9.221 | 9.818 | 9.213 | 0.159 |
| 22 | 15393.804 | 15011.017 | 8.144 | 69.124 | 9.202 | 9.796 | 9.195 | 0.153 |
| 23 | 20106.193 | 19669.568 | 8.086 | 79.127 | 9.14 | 9.722 | 9.135 | 0.132 |
| 24 | 25446.9 | 24956.406 | 8.041 | 89.128 | 9.092 | 9.666 | 9.088 | 0.116 |
| 25 | 31415.927 | 30871.542 | 8.006 | 99.13 | 9.055 | 9.621 | 9.052 | 0.103 |
| 26 | 61575.216 | 60807.235 | 7.917 | 139.124 | 8.962 | 9.511 | 8.96 | 0.072 |
| 27 | 962.113 | 877.692 | 28.14 | 16.715 | 14.619 | 17.379 | 14.158 | 1.573 |
| 28 | 1256.637 | 1175.212 | 27.142 | 19.341 | 14.145 | 16.706 | 13.832 | 1.279 |
| 29 | 1590.431 | 1511.08 | 26.45 | 21.932 | 13.82 | 16.241 | 13.592 | 1.08 |
| 30 | 1963.495 | 1885.673 | 25.941 | 24.5 | 13.582 | 15.899 | 13.409 | 0.935 |
| 31 | 2375.829 | 2299.186 | 25.548 | 27.053 | 13.4 | 15.636 | 13.263 | 0.825 |
| 32 | 2827.433 | 2751.727 | 25.236 | 29.596 | 13.255 | 15.426 | 13.145 | 0.739 |
| 33 | 3318.307 | 3243.365 | 24.981 | 32.131 | 13.138 | 15.256 | 13.047 | 0.669 |
| 34 | 3848.451 | 3774.144 | 24.769 | 34.66 | 13.041 | 15.114 | 12.964 | 0.612 |
| 35 | 4417.865 | 4344.095 | 24.59 | 37.186 | 12.959 | 14.994 | 12.894 | 0.563 |
| 36 | 5026.548 | 4953.239 | 24.437 | 39.707 | 12.889 | 14.891 | 12.833 | 0.522 |
| 37 | 5674.502 | 5601.591 | 24.304 | 42.226 | 12.829 | 14.802 | 12.779 | 0.486 |
| 38 | 6361.725 | 6289.163 | 24.187 | 44.743 | 12.776 | 14.724 | 12.732 | 0.455 |
| 39 | 7088.218 | 7015.965 | 24.085 | 47.257 | 12.729 | 14.656 | 12.691 | 0.428 |
| 40 | 7853.982 | 7782.002 | 23.993 | 49.77 | 12.688 | 14.595 | 12.653 | 0.404 |
| 41 | 8659.015 | 8587.28 | 23.912 | 52.282 | 12.651 | 14.54 | 12.62 | 0.382 |
| 42 | 9503.318 | 9431.804 | 23.838 | 54.793 | 12.617 | 14.491 | 12.589 | 0.363 |
| 43 | 10386.891 | 10315.577 | 23.771 | 57.302 | 12.587 | 14.446 | 12.562 | 0.345 |
| 44 | 11309.734 | 11238.601 | 23.711 | 59.811 | 12.56 | 14.406 | 12.537 | 0.329 |

(fortgesetzt)

| Nr. | $A_{Äqv}$ | $A_1$ | $A_T$ | $r_1$ | $b_1$ | $b_2$ | s | h |
|-----|-----------|-------|-------|-------|-------|-------|---|---|
| 45 | 12271.846 | 12200.88 | 23.656 | 62.319 | 12.535 | 14.369 | 12.514 | 0.315 |
| 46 | 13273.229 | 13202.415 | 23.605 | 64.826 | 12.512 | 14.335 | 12.493 | 0.302 |
| 47 | 14313.882 | 14243.208 | 23.558 | 67.333 | 12.491 | 14.304 | 12.473 | 0.289 |
| 48 | 15393.804 | 15323.26 | 23.515 | 69.839 | 12.472 | 14.275 | 12.455 | 0.278 |
| 49 | 20106.193 | 20036.081 | 23.371 | 79.86 | 12.407 | 14.178 | 12.394 | 0.241 , |
| 50 | 25446.9 | 25377.119 | 23.26 | 89.877 | 12.357 | 14.105 | 12.347 | 0.212 |
| 51 | 31415.927 | 31346.407 | 23.173 | 99.889 | 12.318 | 14.046 | 12.31 | 0.19 |
| 52 | 61575.216 | 61506.358 | 22.953 | 139.922 | 12.22 | 13.899 | 12.216 | 0.133 |

Bei der für die Abschätzung der Werte ($H_{min}(D_{Äqv}, TT_{min}, VD_{Max})$ [Watt]) und $H_{Max}(D_{Äqv}, TT_{max}, VD_{min})$ [Watt]) eingesetzten CFD-Analyse (Computational Fluid Dynamics Analyse) wurden die folgenden Simulationsbedingungen verwendet:

Randbedingungen zur Simulation des Wärmeübergangs:

Temperatur des Raumes zur Außenbeheizung der Rohre: 1300 °C
Emissivität $\varepsilon$ der Rohre: 0,85
Berücksichtigung von Sonnen-/Schattenseiten (Sonnenseite: 80% Strahlung 20% Konvektion; Schattenseite: 20% Strahlung 80% Konvektion) sowie der physikalischen Werkstoffeigenschaften Dichte, spezifische Wärmekapazität und Wärmeleitfähigkeit in Abhängigkeit der Temperatur
Simulationslänge: 2 m

### Tabelle 1: Zustand des Einsatzgemisches am Rohreinlass

| Parameter | Wert |
|-----------|------|
| Temperatur, °C | 621 |
| Druck, bar | 2 |
| Flächenspezifischer Massestrom, g/(s·m$^2$) | 52912,8 |

### Tabelle 2: Physikalische Eigenschaften des Einsatzgesmisches

| Temperatur °C | Dichte kg/m$^3$ | Spezifische Wärmekapazität kJ/kgK | dynamische Viskosität kg/ms | Wärmeleitfähigkeit W/mK |
|---|---|---|---|---|
| 620 | 0.87467615 | 2.81553015 | 2.941481E-05 | 0.08947538 |
| 630 | 0.86669998 | 2.82698110 | 2.974235E-05 | 0.09122076 |
| 640 | 0.85872380 | 2.83843205 | 3.006989E-05 | 0.09296613 |
| 650 | 0.85074763 | 2.84988300 | 3.039743E-05 | 0.09471151 |
| 660 | 0.84277145 | 2.86133395 | 3.072497E-05 | 0.09645688 |
| 670 | 0.83479528 | 2.87278490 | 3.105251E-05 | 0.09820226 |
| 680 | 0.82681910 | 2.88423585 | 3.138005E-05 | 0.09994763 |
| 690 | 0.81884293 | 2.89568680 | 3.170759E-05 | 0.10169301 |
| 700 | 0.81086675 | 2.90713775 | 3.203513E-05 | 0.10343838 |
| 710 | 0.80289058 | 2.91858870 | 3.236268E-05 | 0.10518376 |
| 720 | 0.79491440 | 2.93003965 | 3.269022E-05 | 0.10692913 |
| 730 | 0.78693823 | 2.94149060 | 3.301776E-05 | 0.10867451 |
| 740 | 0.77896205 | 2.95294155 | 3.334530E-05 | 0.11041988 |
| 750 | 0.77098588 | 2.96439250 | 3.367284E-05 | 0.11216526 |
| 760 | 0.76300970 | 2.97584345 | 3.400038E-05 | 0.11391063 |

(fortgesetzt)

| Temperatur °C | Dichte kg/m³ | Spezifische Wärmekapazität kJ/kgK | dynamische Viskosität kg/ms | Wärmeleitfähigkeit W/mK |
|---|---|---|---|---|
| 770 | 0.75503353 | 2.98729440 | 3.432792E-05 | 0.11565601 |
| 780 | 0.74705735 | 2.99874535 | 3.465546E-05 | 0.11740138 |
| 790 | 0.73908118 | 3.01019630 | 3.498300E-05 | 0.11914676 |
| 800 | 0.73110500 | 3.02164725 | 3.531055E-05 | 0.12089213 |
| 810 | 0.72312883 | 3.03309820 | 3.563809E-05 | 0.12263751 |
| 820 | 0.71515265 | 3.04454915 | 3.596563E-05 | 0.12438288 |
| 830 | 0.70717648 | 3.05600010 | 3.629317E-05 | 0.12612826 |
| 840 | 0.69920030 | 3.06745105 | 3.662071E-05 | 0.12787363 |
| 850 | 0.69122413 | 3.07890200 | 3.694825E-05 | 0.12961901 |

Das erfindungsgemäße Rohr wird vorzugsweise zum thermischen Spalten von Kohlenwasserstoffen in Anwesenheit von Dampf, bei dem das Einsatzgemisch durch außenbeheizte Rohre geführt wird, verwendet.

Nachfolgend wird die Erfindung anhand einer lediglich Ausführungsformen der Erfindung darstellenden Zeichnung näher erläutert. Darin zeigen:

Fig. 1    eine perspektivische Ansicht eines erfindungsgemäßen Rohrs,

Fig. 2    einen möglichen Querschnitt eines erfindungsgemäßen Rohrs in einer Schnittebene senkrecht zur Längsachse des Rohres,

Fig. 3    einen nicht zur Erfindung gehörenden Querschnitt eines Rohrs in einer Schnittebene senkrecht zur Längsachse des Rohres,

Fig. 4    ein Diagramm, dass für eine Paarung von zu guten Ergebnissen führenden Anzahlen $N_T$ von Nuten und Nuttiefen TT und für eine Paarung von zu weiter verbesserten Ergebnissen führenden Anzahlen $N_T$ von Nuten und Nuttiefen TT die Abhängigkeit des mit dieser Paarung erreichten Wärmeübergangs vom Innendurchmesser darstellt und

Fig. 5    einen Querschnitt durch ein erfindungsgemäßes Rohr mit einer Nut.

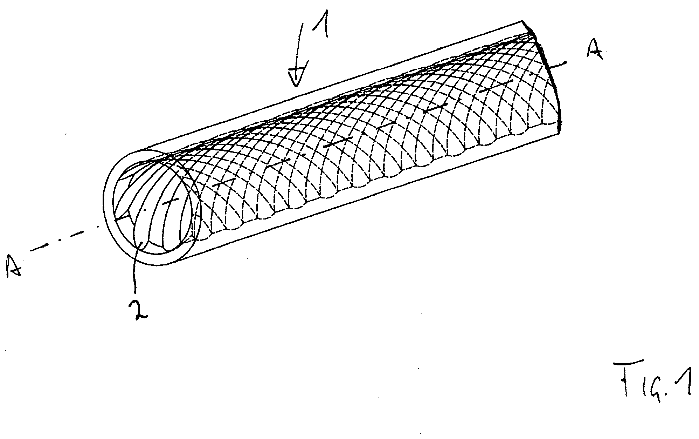

Das in Fig. 1 dargestellt erfindungsgemäße Rohr 1 erstreckt sich entlang einer Längsachse A und hat eine Anzahl von 3 in die Innenoberfläche eingebrachte, sich wendelförmig um die Längsachse A entlang der Innenoberfläche erstreckende Nuten 2.

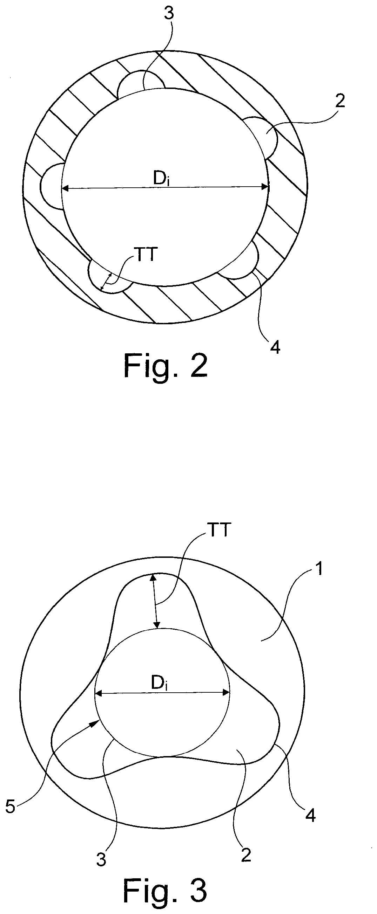

Bei dem in Fig. 2 dargestellten Querschnitt des erfindungsgemäßen Rohrs 1 ist zu erkennen, dass gemäß einer bevorzugten Ausführungsform die Nuten 2 in die ansonsten zylindrisch ausgeführte Innenoberfläche des Rohrs 1 eingebracht werden. Zwischen den Nuten 2 verbleiben somit Teile der zylinderförmig ausgeführten Innenoberfläche des Rohrs 1.

In die Fig. 2 ist die Nuttiefe TT und der Durchmesser Di und der Innenoberflächenkreis 3 eingezeichnet.

In der Fig. 2 ist ebenfalls dargestellt, dass sich der Querschnitt der Nuten 2 durch einen Kreisbogen darstellen lässt.

Bei dem in Fig. 3 dargestellten Querschnitt eines Rohrs 1 ist zu erkennen, dass bei einer nicht zur Erfindung gehörenden Ausführungsform die im Nutgrund 4 konkav ausgeführten Nuten in Richtung auf den Nutmund 5 in eine konvexe Form übergehen können und dass der zwischen zwei Nuten 2 verbleibende Teil der Innenoberfläche nahezu bis auf eine Linie schrumpft. In die Fig. 3 ist die Nuttiefe TT und der Durchmesser Di und der Innenoberflächenkreis 3 eingezeichnet.

Fig. 4 zeigt die in der Tabelle wiedergegebenen Werte für ($H_{min}(D_{Äqv}, TT_{min}, VD_{Max})$ [Watt]) und $H_{Max}(D_{Äqv}, TT_{max}, VD_{min})$ [Watt]) in Abhängigkeit des Äquivalenzdurchmessers $D_{Äqv}$. Zu erkennen ist, dass diese Werte durch jeweils eine Linie dargestellt werden können.

Fig. 5 und das in Fig. 5 abgebildete Detail Y geben beispielhaft an einem erfindungsgemäßen Rohr mit einer Nut die in den Ansprüchen und dieser Beschreibung verwendete Nomenklatur der Abkürzungen $A_1$, $r_1$, TT, h, $b_2$, $b_1$, $A_T$, $r_2$ und s wieder.

Wie die vier das Rohr charakterisierenden Werte $N_T$, Di, $r_2$ und TT gefunden werden können, lässt sich an den nachfolgenden Beispielen zeigen.

Bei einem Beispiel besteht die externe Anforderung, dass die Durchtrittsfläche dem eines Glattrohrs mit 60mm Durchmesser entsprechen soll. Ferner ergibt sich aus den für die Herstellung des Rohrs einsetzbaren Werkzeugen herstellungsseitig die Beschränkung, dass eine Nuttiefe TT von 1,3 mm und ein Radius $r_2$ des Kreisbogens des Nutgrunds von 8mm bei im Querschnitt kreisbogenförmigen Nuten gewählt werden soll. Fraglich ist, mit welchem Durchmesser Di und mit welcher Anzahl von Nuten die Wirtschaftlichkeit des thermischen Spaltens von Kohlenwasserstoffen in Röhrenöfen mit außenbeheizten Rohren verbessert werden kann.

Ausgangspunkt ist somit:

$D_{Äqv}$ = 60 mm
$A_{Äqv}$ = $\pi$ (60/2)$^2$ = 2827,43 mm$^2$
TT = 1,3 mm
$r_2$ = 8 mm
Aus $A_{Äqv}$ ergibt sich unmittelbar $r_{Äqv}$ = $Di_{Äqv}$/2 = 30 mm

Aus $r_2$, $r_{Äqv}$ ergibt sich für die Bestimmung des $N_{ref}$ im ersten Schritt mit der Formel

$$N_{ref} \leq \frac{\pi}{arcsin\left(\frac{\left|\sqrt{2 \cdot |r_{Äqv}| \cdot \frac{2 \cdot |r_2| \cdot 1,3 - 1,3^2}{2 \cdot (|r_{Äqv}| - |r_2| + 1,3)} - \left(\frac{2 \cdot |r_2| \cdot 1,3 - 1,3^2}{2 \cdot (|r_{Äqv}| - |r_2| + 1,3)}\right)^2}\right|}{|r_{Äqv}|}\right)}$$

ein erstes $N_{ref}$ von 18. Mit diesem $N_{ref}$ von 18 ergibt sich aus der zuvor beschriebenen Zielwertsuche ein $r_{Nref}$ von 29,1406241, bei dem zugleich die Nebenbedingung

$$\pi \geq N_{ref} \cdot arcsin\left(\frac{\left|\sqrt{2 \cdot |r_{Nref}| \cdot \frac{2 \cdot |r_2| \cdot 1,3 - 1,3^2}{2 \cdot (|r_{Nref}| - |r_2| + 1,3)} - \left(\frac{2 \cdot |r_2| \cdot 1,3 - 1,3^2}{2 \cdot (|r_{Nref}| - |r_2| + 1,3)}\right)^2}\right|}{|r_{Nref}|}\right), r_{Nref} < r_{Äqv}$$

erfüllt wird. Die Zahl 18 ist somit als $N_{ref}$ zu verwenden.

Mit $N_{ref}$ = 18 ergibt sich VD = $N_T$/18 * 100.

Unter Einsetzen der minimalen Werte für P1, P2 und P3 ergibt sich für den linken Term der Gleichung

$$P1 * |D_{Äqv}|^2 + P2 * |D_{Äqv}| + P3$$
$$=$$
$$C1 + C2 * |TT| + C3 * VD + C4 * |D_{Äqv}|$$
$$+ (|TT| - C5) * (VD - C6) * C7$$
$$+ (|TT| - C5) * (|D_{Äqv}| - C8) * C9$$
$$+ (VD - C6) * (|D_{Äqv}| - C8) * C10$$
$$+ (|D_{Äqv}| - C8) * (|D_{Äqv}| - C8) * C11$$

mit den Konstanten

C1 = 1946,066

C2 = 302,378
C3 = -2,178
C4 = 266,002
C5 = 1,954
C6 = 50,495
C7 = -2,004
C8 = 79,732
C9 = -1,041
C10 = 0,04631
C11 = -0,26550
$-0,2 \geq P1 \geq -0,3$
$310 \leq P2 \leq 315$
$200 \leq P3 \leq 1500$

der Wert

$$P1 * |D_{Äqv}|^2 + P2 * |D_{Äqv}| + P3 = -0,3 * (60)^2 + 310 * 60 + 200 = 17.720$$

und unter Einsetzen der maximalen Werte für P1, P2 und P3 für den linken Term der Gleichung

$$P1 * |D_{Äqv}|^2 + P2 * |D_{Äqv}| + P3 = -0,2 * (60)^2 + 315 * 60 + 1500 = 19.680$$

Für den rechten Term der Gleichung

$$C1 + C2 * |TT| + C3 * VD + C4 * |D_{Äqv}|$$
$$+ (|TT| - C5) * (VD - C6) * C7$$
$$+ (|TT| - C5) * (|D_{Äqv}| - C8) * C9$$
$$+ (VD - C6) * (|D_{Äqv}| - C8) * C10$$
$$+ (|D_{Äqv}| - C8) * (|D_{Äqv}| - C8) * C11$$

ergibt sich nach Einsetzen von $|TT| = 1,3$ und $|D_{Äqv}| = 60$

$$1946,066 + 302,378 * 1,3 + -2,178 * VD + 266,002 * 60$$
$$+ (1,3 - 1,954) * (VD - 50,495) * -2,004$$
$$+ (1,3 - 1,954) * (60 - 79,732) * -1,041$$
$$+ (VD - 50,495) * (60 - 79,732) * 0,04631$$
$$+ (60 - 79,732) * (60 - 79,732) * -0,26550$$

mithin:

18162,4329 - 1,7812 VD
und mit VD = $N_T / N_{ref} * 100 = N_T / 18 * 100 = 5,5556 N_T$ ergibt sich
18162,4329 - 9,8954 $N_T$

Um sicherzustellen, dass das Rohr die erfindungsgemäßen Vorteile erzielt, sollte $N_T$ so gewählt werden, dass die Beziehung

$$19.680 \geq 18162,4329 - 9,8954 N_T$$

und die Beziehung

$$18162{,}4329 - 9{,}8954\ N_T \geq 17.720$$

erfüllt ist. Beide Beziehungen wären mit $1 \leq N_T \leq 44{,}71$ erfüllt.

Da das so gefundene $N_T$ größer ist, als die zuvor berechnete Größe $N_{ref}$ ergibt sich, dass selbst beim Einbringen der maximal möglichen Zahl der Nuten ($N_{ref} = 18$) bei dieser Taltiefe immer noch die erfindungsgemäßen Vorteile erreicht werden können. Der Anwender ist in diesem Ausführungsbeispiel somit frei, das Rohr bis zur maximal möglichen Zahl der Nuten zu bestücken, ohne die Vorteile der Erfindung zu verlieren.

Mit dem so gefundenen $N_T$ lässt sich der Radius $r_1$ des Rohres und damit der Innendurchmesser Di (= $2\,r_1$) des Rohres mit der Formel (1) iterativ bestimmen, da $A_{\text{Äqv}} = 2827{,}43\ \text{mm}^2$ ist.

Mithin lassen sich alle für die Herstellung des Rohres, das die Vorzüge der Erfindung umsetzt, notwendigen Parameter bestimmen.

**Patentansprüche**

1. Rohr zum thermischen Spalten von Kohlenwasserstoffen in Anwesenheit von Dampf, bei dem das Einsatzgemisch durch außenbeheizte Rohre geführt wird, wobei

   • das Rohr (1) sich entlang einer Längsachse (A) erstreckt und eine Anzahl $N_T$ in die Innenoberfläche des Rohres (1) eingebrachte, sich wendelförmig um die Längsachse (A) entlang der Innenoberfläche erstreckende Nuten (2) aufweist,
   • die Innenoberfläche, in die die Nuten (2) eingebracht wurden, in einem Querschnitt senkrecht zur Längsachse (A) einen in Millimeter gemessenen Durchmesser Di und einen in Millimeter gemessenen Radius $r_1 = Di/2$ aufweist,
   • die Nuten (2) in dem Querschnitt senkrecht zur Längsachse (A) in ihrem Nutgrund (4) jeweils die Form eine Kreisbogens haben und der Kreisbogen einen in Millimeter gemessenen Radius $r_2$ hat,
   die Nuten (2) jeweils eine Nuttiefe TT aufweisen, die in dem Querschnitt senkrecht zur Längsachse (A) jeweils dem kleinsten Abstand zwischen dem Kreis mit dem Durchmesser Di, auf dem die Innenoberfläche liegt und dessen Mittelpunkt auf der Längsachse (A) liegt, und dem entferntesten Punkt des Nutgrunds (4) der Nut (2) von der Längsachse (A) entspricht **dadurch gekennzeichnet,**
   **dass** der Zahlenwert $|D_{\text{Äqv}}|$ eines Äquivalenzdurchmessers $D_{\text{Äqv}}$ und die Anzahl $N_T$ der Nuten (2) und der Zahlenwert $|TT|$ der in mm gemessenen Nuttiefe TT der Nuten (2) die Beziehung

$$P1 * |D_{\text{Äqv}}|^2 + P2 * |D_{\text{Äqv}}| + P3$$
$$=$$
$$C1 + C2 * |TT| + C3 * VD + C4 * |D_{\text{Äqv}}|$$
$$+ (|TT| - C5) * (VD - C6) * C7$$
$$+ (|TT| - C5) * (|D_{\text{Äqv}}| - C8) * C9$$

   mit den Konstanten

   $C1 = 1946{,}066$
   $C2 = 302{,}378$
   $C3 = -2{,}178$
   $C4 = 266{,}002$
   $C5 = 1{,}954$
   $C6 = 50{,}495$
   $C7 = -2{,}004$
   $C8 = 79{,}732$
   $C9 = -1{,}041$
   $-0{,}2 \geq P1 \geq -0{,}3$
   $310 \leq P2 \leq 315$
   $200 \leq P3 \leq 1500$

   erfüllen,

wobei sich die Nutdichte VD, die das Verhältnis der Nuten $N_T$ des Rohres im Verhältnis zu der Referenzzahl $N_{ref}$ der maximal auf der Innenoberfläche eines Rohres mit gleichem Äquivalenzdurchmessers $D_{Äqv}$ einbringbaren Nuten mit einer Nuttiefe TT = 1,3mm in Prozent beschreibt, aus der folgenden Beziehung ergibt:

$$VD = N_T \, / \, N_{ref} * 100$$

und die Referenzzahl $N_{ref}$ die größte natürliche Zahl ist, die die Beziehung

$$N_{ref} \leq \cfrac{\pi}{arcsin\left(\cfrac{\left|\sqrt{2 \cdot |r_{Äqv}| \cdot \cfrac{2 \cdot |r_2| \cdot 1,3 - 1,3^2}{2 \cdot (|r_{Äqv}| - |r_2| + 1,3)} - \left(\cfrac{2 \cdot |r_2| \cdot 1,3 - 1,3^2}{2 \cdot (|r_{Äqv}| - |r_2| + 1,3)}\right)^2}\right|}{|r_{Äqv}|}\right)}$$

erfüllt, wobei

$$|r_{Äqv}| = \left|\sqrt{\cfrac{|A_{Äqv}|}{\pi}}\right|$$

$$A_{Äqv} = A_1 + N_T \cdot A_T$$

$$A_1 = \pi \cdot |r_1|^2$$

$$A_T = \left[|r_2| \cdot \cfrac{b_2}{2} - \cfrac{s \cdot (|r_2| - (|TT| + h))}{2}\right] - \left[|r_1| \cdot \cfrac{b_1}{2} - \cfrac{s \cdot (|r_1| - h)}{2}\right]$$

$$b_1 = 2 \cdot |r_1| \cdot arcsin\left(\cfrac{\left|\sqrt{2 \cdot |r_1| \cdot \cfrac{2 \cdot |r_2| \cdot |TT| - |TT|^2}{2 \cdot (|r_1| - |r_2| + |TT|)} - \left(\cfrac{2 \cdot |r_2| \cdot |TT| - |TT|^2}{2 \cdot (|r_1| - |r_2| + |TT|)}\right)^2}\right|}{|r_1|}\right)$$

$$b_2 = 2 \cdot |r_2| \cdot arcsin\left(\cfrac{\left|\sqrt{2 \cdot |r_1| \cdot \cfrac{2 \cdot |r_2| \cdot |TT| - |TT|^2}{2 \cdot (|r_1| - |r_2| + |TT|)} - \left(\cfrac{2 \cdot |r_2| \cdot |TT| - |TT|^2}{2 \cdot (|r_1| - |r_2| + |TT|)}\right)^2}\right|}{|r_2|}\right)$$

$$s = 2 \cdot \left|\sqrt{2 \cdot |r_1| \cdot \cfrac{2 \cdot |r_2| \cdot |TT| - |TT|^2}{2 \cdot (|r_1| - |r_2| + |TT|)} - \left(\cfrac{2 \cdot |r_2| \cdot |TT| - |TT|^2}{2 \cdot (|r_1| - |r_2| + |TT|)}\right)^2}\right|$$

$$h = \frac{2 \cdot |r_2| \cdot |TT| - |TT|^2}{2 \cdot (|r_1| - |r_2| + |TT|)}$$

und zu der es ein $r_{Nref}$ gibt, das unter Rückgriff auf den mit der vorstehenden Beziehung ermittelten Wert für $A_{\ddot{A}qv}$ die folgenden Beziehungen erfüllt, wonach $A_{\ddot{A}qv}$ ebenfalls

$$A_{\ddot{A}qv}$$

$$= \pi \cdot \left|r_{N_{ref}}\right|^2 + N_{ref}$$

$$\cdot \Bigg[ \Bigg[ |r_2|^2$$

$$\cdot \, arcsin\left(\frac{\left|\sqrt{2 \cdot \left|r_{N_{ref}}\right| \cdot \dfrac{2 \cdot |r_2| \cdot 1{,}3 - 1{,}3^2}{2 \cdot \left(\left|r_{N_{ref}}\right| - |r_2| + 1{,}3\right)} - \left(\dfrac{2 \cdot |r_2| \cdot 1{,}3 - 1{,}3^2}{2 \cdot \left(\left|r_{N_{ref}}\right| - |r_2| + 1{,}3\right)}\right)^2}\,\right|}{|r_2|}\right)$$

$$- \left|\sqrt{2 \cdot \left|r_{N_{ref}}\right| \cdot \frac{2 \cdot |r_2| \cdot 1{,}3 - 1{,}3^2}{2 \cdot \left(\left|r_{N_{ref}}\right| - |r_2| + 1{,}3\right)} - \left(\frac{2 \cdot |r_2| \cdot 1{,}3 - 1{,}3^2}{2 \cdot \left(\left|r_{N_{ref}}\right| - |r_2| + 1{,}3\right)}\right)^2}\,\right|$$

$$\cdot \left(|r_2| - \left(1{,}3 + \frac{2 \cdot |r_2| \cdot 1{,}3 - 1{,}3^2}{2 \cdot \left(\left|r_{N_{ref}}\right| - |r_2| + 1{,}3\right)}\right)\right)\Bigg]$$

$$- \Bigg[ \left|r_{N_{ref}}\right|^2$$

$$\cdot \, arcsin\left(\frac{\left|\sqrt{2 \cdot \left|r_{N_{ref}}\right| \cdot \dfrac{2 \cdot |r_2| \cdot 1{,}3 - 1{,}3^2}{2 \cdot \left(\left|r_{N_{ref}}\right| - |r_2| + 1{,}3\right)} - \left(\dfrac{2 \cdot |r_2| \cdot 1{,}3 - 1{,}3^2}{2 \cdot \left(\left|r_{N_{ref}}\right| - |r_2| + 1{,}3\right)}\right)^2}\,\right|}{|r_1|}\right)$$

$$- \left|\sqrt{2 \cdot \left|r_{N_{ref}}\right| \cdot \frac{2 \cdot |r_2| \cdot 1{,}3 - 1{,}3^2}{2 \cdot \left(\left|r_{N_{ref}}\right| - |r_2| + 1{,}3\right)} - \left(\frac{2 \cdot |r_2| \cdot 1{,}3 - 1{,}3^2}{2 \cdot \left(\left|r_{N_{ref}}\right| - |r_2| + 1{,}3\right)}\right)^2}\,\right|$$

$$\cdot \left(\left|r_{N_{ref}}\right| - \frac{2 \cdot |r_2| \cdot 1{,}3 - 1{,}3^2}{2 \cdot \left(\left|r_{N_{ref}}\right| - |r_2| + 1{,}3\right)}\right)\Bigg]\Bigg]$$

ohne die Nebenbedingungen

$$\pi \geq N_{ref} \cdot arcsin\left(\frac{\left|\sqrt{2 \cdot \left|r_{N_{ref}}\right| \cdot \frac{2 \cdot \left|r_2\right| \cdot 1,3 - 1,3^2}{2 \cdot \left(\left|r_{N_{ref}}\right| - \left|r_2\right| + 1,3\right)} - \left(\frac{2 \cdot \left|r_2\right| \cdot 1,3 - 1,3^2}{2 \cdot \left(\left|r_{N_{ref}}\right| - \left|r_2\right| + 1,3\right)}\right)^2}\right|}{\left|r_{N_{ref}}\right|}\right), r_{N_{ref}} < r_{\ddot{A}qv}$$

zu verletzen und wobei sich der Äquivalenzdurchmesser $D_{\ddot{A}qv}$ aus der Beziehung $D_{\ddot{A}qv} = 2\,r_{\ddot{A}qv}$ ergibt, wobei die Innenoberfläche des Rohrs zylinderförmig ist und in diese zylinderförmige Innenoberfläche die Nuten eingebracht werden, so dass zwischen den Nuten Teile der Innenoberfläche verbleiben, die Teile eines Zylinders bilden.

2. Rohr zum thermischen Spalten von Kohlenwasserstoffen in Anwesenheit von Dampf, bei dem das Einsatzgemisch durch außenbeheizte Rohre geführt wird, wobei

• das Rohr (1) sich entlang einer Längsachse (A) erstreckt und eine Anzahl $N_T$ in die Innenoberfläche des Rohres (1) eingebrachte, sich wendelförmig um die Längsachse (A) entlang der Innenoberfläche erstreckende Nuten (2) aufweist,
• die Innenoberfläche, in die die Nuten (2) eingebracht wurden, in einem Querschnitt senkrecht zur Längsachse (A) einen in Millimeter gemessenen Durchmesser Di und einen in Millimeter gemessenen Radius $r_1 = Di/2$ aufweist,
• die Nuten (2) in dem Querschnitt senkrecht zur Längsachse (A) in ihrem Nutgrund (4) jeweils die Form eines Kreisbogens haben und der Kreisbogen einen in Millimeter gemessenen Radius $r_2$ hat,
die Nuten (2) jeweils eine Nuttiefe TT aufweisen, die in dem Querschnitt senkrecht zur Längsachse (A) jeweils dem kleinsten Abstand zwischen dem Kreis mit dem Durchmesser Di, auf dem die Innenoberfläche liegt und dessen Mittelpunkt auf der Längsachse (A) liegt, und dem entferntesten Punkt des Nutgrunds (4) der Nut (2) von der Längsachse (A) entspricht **dadurch gekennzeichnet,**
**dass** der Zahlenwert $|D_{\ddot{A}qv}|$ eines Äquivalenzdurchmessers $D_{\ddot{A}qv}$ und die Anzahl $N_T$ der Nuten (2) und der Zahlenwert $|TT|$ der in mm gemessenen Nuttiefe TT der Nuten (2) die Beziehung

$$P1 * |D_{\ddot{A}qv}|^2 + P2 * |D_{\ddot{A}qv}| + P3$$
$$=$$
$$C1 + C2 * |TT| + C3 * VD + C4 * |D_{\ddot{A}qv}|$$
$$+ (|TT| - C5) * (VD - C6) * C7$$
$$+ (|TT| - C5) * (|D_{\ddot{A}qv}| - C8) * C9$$
$$+ (VD - C6) * (|D_{\ddot{A}qv}| - C8) * C10$$
$$+ (|D_{\ddot{A}qv}| - C8) * (|D_{\ddot{A}qv}| - C8) * C11$$

mit den Konstanten

C1 = 1946,066
C2 = 302,378
C3 = -2,178
C4 = 266,002
C5 = 1,954
C6 = 50,495
C7 = -2,004
C8 = 79,732
C9 = -1,041
C10 = 0,04631
C11 = -0,26550
$-0,2 \geq P1 \geq -0,3$

$310 \leq P2 \leq 315$
$200 \leq P3 \leq 1500$

erfüllen,
wobei sich die Nutdichte VD, die das Verhältnis der Nuten $N_T$ des Rohres im Verhältnis zu der Referenzzahl $N_{ref}$ der maximal auf der Innenoberfläche eines Rohres mit gleichem Äquivalenzdurchmessers $D_{Äqv}$ einbringbaren Nuten mit einer Nuttiefe TT = 1,3 mm in Prozent beschreibt, aus der folgenden Beziehung ergibt:

$$VD = N_T / N_{ref} * 100$$

und die Referenzzahl $N_{ref}$ die größte natürliche Zahl ist, die die Beziehung

$$N_{ref} \leq \frac{\pi}{arcsin\left(\frac{\left|\sqrt{2 \cdot |r_{Äqv}| \cdot \frac{2 \cdot |r_2| \cdot 1,3 - 1,3^2}{2 \cdot (|r_{Äqv}| - |r_2| + 1,3)} - \left(\frac{2 \cdot |r_2| \cdot 1,3 - 1,3^2}{2 \cdot (|r_{Äqv}| - |r_2| + 1,3)}\right)^2}\right|}{|r_{Äqv}|}\right)}$$

erfüllt, wobei

$$|r_{Äqv}| = \left|\sqrt{\frac{|A_{Äqv}|}{\pi}}\right|$$

$$A_{Äqv} = A_1 + N_T \cdot A_T$$

$$A_1 = \pi \cdot |r_1|^2$$

$$A_T = \left[|r_2| \cdot \frac{b_2}{2} - \frac{s \cdot (|r_2| - (|TT| + h))}{2}\right] - \left[|r_1| \cdot \frac{b_1}{2} - \frac{s \cdot (|r_1| - h)}{2}\right]$$

$$b_1 = 2 \cdot |r_1| \cdot arcsin\left(\frac{\left|\sqrt{2 \cdot |r_1| \cdot \frac{2 \cdot |r_2| \cdot |TT| - |TT|^2}{2 \cdot (|r_1| - |r_2| + |TT|)} - \left(\frac{2 \cdot |r_2| \cdot |TT| - |TT|^2}{2 \cdot (|r_1| - |r_2| + |TT|)}\right)^2}\right|}{|r_1|}\right)$$

$$b_2 = 2 \cdot |r_2| \cdot arcsin\left(\frac{\left|\sqrt{2 \cdot |r_1| \cdot \frac{2 \cdot |r_2| \cdot |TT| - |TT|^2}{2 \cdot (|r_1| - |r_2| + |TT|)} - \left(\frac{2 \cdot |r_2| \cdot |TT| - |TT|^2}{2 \cdot (|r_1| - |r_2| + |TT|)}\right)^2}\right|}{|r_2|}\right)$$

$$s = 2 \cdot \left| \sqrt{2 \cdot |r_1| \cdot \frac{2 \cdot |r_2| \cdot |TT| - |TT|^2}{2 \cdot (|r_1| - |r_2| + |TT|)} - \left( \frac{2 \cdot |r_2| \cdot |TT| - |TT|^2}{2 \cdot (|r_1| - |r_2| + |TT|)} \right)^2} \right|$$

$$h = \frac{2 \cdot |r_2| \cdot |TT| - |TT|^2}{2 \cdot (|r_1| - |r_2| + |TT|)}$$

und zu der es ein $r_{Nref}$ gibt, das unter Rückgriff auf den mit der vorstehenden Beziehung ermittelten Wert für $A_{\text{Äqv}}$ die folgenden Beziehungen erfüllt, wonach $A_{\text{Äqv}}$ ebenfalls

$$A_{\ddot{A}qv}$$

$$= \pi \cdot \left|r_{N_{ref}}\right|^2 + N_{ref}$$

$$\cdot \left[\left[\left[|r_2|^2\right.\right.\right.$$

$$\cdot \arcsin\left(\frac{\sqrt{2 \cdot \left|r_{N_{ref}}\right| \cdot \frac{2 \cdot |r_2| \cdot 1{,}3 - 1{,}3^2}{2 \cdot \left(\left|r_{N_{ref}}\right| - |r_2| + 1{,}3\right)} - \left(\frac{2 \cdot |r_2| \cdot 1{,}3 - 1{,}3^2}{2 \cdot \left(\left|r_{N_{ref}}\right| - |r_2| + 1{,}3\right)}\right)^2}}{|r_2|}\right)$$

$$- \left|\sqrt{2 \cdot \left|r_{N_{ref}}\right| \cdot \frac{2 \cdot |r_2| \cdot 1{,}3 - 1{,}3^2}{2 \cdot \left(\left|r_{N_{ref}}\right| - |r_2| + 1{,}3\right)} - \left(\frac{2 \cdot |r_2| \cdot 1{,}3 - 1{,}3^2}{2 \cdot \left(\left|r_{N_{ref}}\right| - |r_2| + 1{,}3\right)}\right)^2}\right|$$

$$\cdot \left(|r_2| - \left(1{,}3 + \frac{2 \cdot |r_2| \cdot 1{,}3 - 1{,}3^2}{2 \cdot \left(\left|r_{N_{ref}}\right| - |r_2| + 1{,}3\right)}\right)\right)\right]$$

$$- \left[\left|r_{N_{ref}}\right|^2\right.$$

$$\cdot \arcsin\left(\frac{\sqrt{2 \cdot \left|r_{N_{ref}}\right| \cdot \frac{2 \cdot |r_2| \cdot 1{,}3 - 1{,}3^2}{2 \cdot \left(\left|r_{N_{ref}}\right| - |r_2| + 1{,}3\right)} - \left(\frac{2 \cdot |r_2| \cdot 1{,}3 - 1{,}3^2}{2 \cdot \left(\left|r_{N_{ref}}\right| - |r_2| + 1{,}3\right)}\right)^2}}{|r_1|}\right)$$

$$- \left|\sqrt{2 \cdot \left|r_{N_{ref}}\right| \cdot \frac{2 \cdot |r_2| \cdot 1{,}3 - 1{,}3^2}{2 \cdot \left(\left|r_{N_{ref}}\right| - |r_2| + 1{,}3\right)} - \left(\frac{2 \cdot |r_2| \cdot 1{,}3 - 1{,}3^2}{2 \cdot \left(\left|r_{N_{ref}}\right| - |r_2| + 1{,}3\right)}\right)^2}\right|$$

$$\cdot \left(\left|r_{N_{ref}}\right| - \frac{2 \cdot |r_2| \cdot 1{,}3 - 1{,}3^2}{2 \cdot \left(\left|r_{N_{ref}}\right| - |r_2| + 1{,}3\right)}\right)\right]\right]$$

ohne die Nebenbedingungen

$$\pi \geq N_{ref} \cdot arcsin\left(\frac{\sqrt{2\cdot\left|r_{N_{ref}}\right|\cdot\frac{2\cdot|r_2|\cdot1,3-1,3^2}{2\cdot\left(\left|r_{N_{ref}}\right|-|r_2|+1,3\right)}-\left(\frac{2\cdot|r_2|\cdot1,3-1,3^2}{2\cdot\left(\left|r_{N_{ref}}\right|-|r_2|+1,3\right)}\right)^2}}{\left|r_{N_{ref}}\right|}\right), r_{N_{ref}} < r_{\text{Äqv}}$$

zu verletzen und wobei sich der Äquivalenzdurchmesser $D_{\text{Äqv}}$ aus der Beziehung $D_{\text{Äqv}} = 2\ r_{\text{Äqv}}$ ergibt, wobei die Innenoberfläche des Rohrs zylinderförmig ist und in diese zylinderförmige Innenoberfläche die Nuten eingebracht werden, so dass zwischen den Nuten Teile der Innenoberfläche verbleiben, die Teile eines Zylinders bilden.

3. Rohr nach einem der Ansprüche 1 oder 2, **dadurch gekennzeichnet, dass** der Durchmesser Di der Innenoberfläche, in die die Nuten (2) eingebracht wurden in einem Bereich von 15 mm bis 280 mm liegt.

4. Rohr nach einem der Ansprüche 1 bis 3, **dadurch gekennzeichnet, dass** die Nuttiefe TT in einem Bereich von 0,1 mm bis 10 mm liegt.

5. Rohr nach einem der Ansprüche 1 bis 4, **dadurch gekennzeichnet, dass** die Anzahl $N_T$ der Nuten (2) eine Nutdichte zur Folge hat, die in einem Bereich von 1% bis 347% liegt.

6. Rohr nach einem der Ansprüche 1 bis 5, **dadurch gekennzeichnet, dass** die Nuten (2) in einem Winkel von 20° bis 40°, vorzugsweise von 22,5° bis 32,5°, bezogen auf die Längsachse (A), verlaufen.

7. Rohr nach einem der Ansprüche 1 bis 6, **dadurch gekennzeichnet, dass** das Rohr ein Schleudergußrohr ist oder aus einem Schleudergußrohr durch Einbringen von Nuten in ein Schleudergußrohr hergestellt wurde.

8. Rohr nach einem der Ansprüche 1 bis 7, **dadurch gekennzeichnet, dass** das Rohr eine Nickel-Chrom-Eisen-Legierung mit hoher Oxidations- und Aufkohlungsbeständigkeit, Zeitstandfestigkeit und Kriechbeständigkeit aus

    0,05% bis 0,6% Kohlenstoff
    20% bis 50% Chrom
    5% bis 40% Eisen
    2% bis 6% Aluminium
    bis 2% Silizium
    bis 2% Mangan
    bis 1,5% Niob
    bis 1,5% Tantal
    bis 6,0% Wolfram
    bis 1,0% Titan
    bis 1,0% Zirkonium
    bis 0,5% Yttrium
    bis 0,5% Cer
    bis 0,5% Molybdän
    bis 0,1% Stickstoff
    Rest Nickel einschließlich erschmelzungsbedingter Verunreinigungen aufweist, insbesondere aus einer solchen Legierung besteht.

9. Vorrichtung zum thermischen Spalten von Kohlenwasserstoffen in Anwesenheit von Dampf, bei dem das Einsatzgemisch durch außenbeheizte Rohre geführt wird, **gekennzeichnet durch** ein Rohr nach einem der Ansprüche 1 bis 8.

10. Verwendung eines Rohrs nach einem der Ansprüche 1 bis 8 zum thermischen Spalten von Kohlenwasserstoffen in Anwesenheit von Dampf, bei dem das Einsatzgemisch durch außenbeheizte Rohre geführt wird.

**Claims**

1.  A tube for the thermal splitting of hydrocarbons in the presence of vapour, wherein the feed mixture is guided through tubes heated from the outside, wherein

    • the tube (1) extends along a longitudinal axis (A) and has a number $N_T$ of grooves (2) introduced into the inner surface of the tube (1) and extending helically about the longitudinal axis (A) along the inner surface,
    • the inner surface into which the grooves (2) were introduced has a diameter Di measured in millimetres and a radius $r_1$ = Di/2 measured in millimetres in a cross-section perpendicular to the longitudinal axis (A),
    • the grooves (2) in the cross-section perpendicular to the longitudinal axis (A) respectively have the shape of a circular arc in their groove base (4) and the circular arc has a radius $r_2$ measured in millimetres,
    the grooves (2) respectively have a groove depth TT, which, in the cross-section perpendicular to the longitudinal axis (A), respectively corresponds to the smallest distance between the circle with the diameter Di on which the inner surface lies and whose centre point lies on the longitudinal axis (A), and the most distant point of the groove base (4) of the groove (2) from the longitudinal axis (A), **characterised in that**
    the numerical value $|D_{eqv}|$ of an equivalence diameter $D_{eqv}$ and the number $N_T$ of the grooves (2) and the numerical value $|TT|$ of the groove depth TT of the grooves (2) measured in mm fulfil the relationship

$$P1 * |D_{eqv}|^2 + P2 * |D_{eqv}| + P3$$
$$=$$
$$C1 + C2 * |TT| + C3 * VD + C4 * |D_{eqv}|$$
$$+ (|TT| - C5) * (VD - C6) * C7$$
$$+ (|TT| - C5) * (|D_{eqv}| - C8) * C9$$

with the constants

C1 = 1946,066
C2 = 302,378
C3 = -2,178
C4 = 266,002
C5 = 1,954
C6 = 50,495
C7 = -2,004
C8 = 79,732
C9 = -1,041
-0,2 ≥ P1 ≥ -0,3
310 ≤ P2 ≤ 315
200 ≤ P3 ≤ 1500

wherein the groove density VD which describes the relation of the grooves $N_T$ of the tube in relation to the reference number $N_{ref}$ of the grooves which can be brought in on the inner surface of a tube with the same equivalence diameter $D_{eqv}$ at maximum, with a groove depth TT = 1.3 mm, in percent, results from the following relationship:

$$VD = N_T/N_{ref} * 100$$

and the reference number $N_{ref}$ is the largest natural number which fulfils the relationship

$$N_{ref} \leq \frac{\pi}{arcsin\left(\frac{\left|\sqrt{2 \cdot |r_{eqv}| \cdot \frac{2 \cdot |r_2| \cdot 1.3 - 1.3^2}{2 \cdot (|r_{eqv}| - |r_2| + 1.3)} - \left(\frac{2 \cdot |r_2| \cdot 1.3 - 1.3^2}{2 \cdot (|r_{eqv}| - |r_2| + 1.3)}\right)^2}\right|}{|r_{eqv}|}\right)}$$

wherein

$$|r_{eqv}| = \left|\sqrt{\frac{|A_{eqv}|}{\pi}}\right|$$

$$A_{eqv} = A_1 + N_T \cdot A_T$$

$$A_1 = \pi \cdot |r_1|^2$$

$$A_T = \left[|r_2| \cdot \frac{b_2}{2} - \frac{s \cdot (|r_2| - (|TT| + h))}{2}\right] - \left[|r_1| \cdot \frac{b_1}{2} - \frac{s \cdot (|r_1| - h)}{2}\right]$$

$$b_1 = 2 \cdot |r_1| \cdot arcsin\left(\frac{\left|\sqrt{2 \cdot |r_1| \cdot \frac{2 \cdot |r_2| \cdot |TT| - |TT|^2}{2 \cdot (|r_1| - |r_2| + |TT|)} - \left(\frac{2 \cdot |r_2| \cdot |TT| - |TT|^2}{2 \cdot (|r_1| - |r_2| + |TT|)}\right)^2}\right|}{|r_1|}\right)$$

$$b_2 = 2 \cdot |r_2| \cdot arcsin\left(\frac{\left|\sqrt{2 \cdot |r_1| \cdot \frac{2 \cdot |r_2| \cdot |TT| - |TT|^2}{2 \cdot (|r_1| - |r_2| + |TT|)} - \left(\frac{2 \cdot |r_2| \cdot |TT| - |TT|^2}{2 \cdot (|r_1| - |r_2| + |TT|)}\right)^2}\right|}{|r_2|}\right)$$

$$s = 2 \cdot \left|\sqrt{2 \cdot |r_1| \cdot \frac{2 \cdot |r_2| \cdot |TT| - |TT|^2}{2 \cdot (|r_1| - |r_2| + |TT|)} - \left(\frac{2 \cdot |r_2| \cdot |TT| - |TT|^2}{2 \cdot (|r_1| - |r_2| + |TT|)}\right)^2}\right|$$

$$h = \frac{2 \cdot |r_2| \cdot |TT| - |TT|^2}{2 \cdot (|r_1| - |r_2| + |TT|)}$$

and for which an $r_{Nref}$ exists, which, with recourse to the value for $A_{eqv}$ determined with the foregoing relationship, fulfils the following relationships, whereby $A_{eqv}$ also

$$A_{eqv}$$

$$= \pi \cdot \left| r_{Nref} \right|^2 + N_{ref}$$

$$\cdot \Bigg[ |r_2|^2$$

$$\cdot \, arcsin \left( \frac{\left| \sqrt{2 \cdot \left| r_{Nref} \right| \cdot \frac{2 \cdot |r_2| \cdot 1.3 - 1.3^2}{2 \cdot \left( \left| r_{Nref} \right| - |r_2| + 1.3 \right)} - \left( \frac{2 \cdot |r_2| \cdot 1.3 - 1.3^2}{2 \cdot \left( \left| r_{Nref} \right| - |r_2| + 1.3 \right)} \right)^2} \, \right|}{|r_2|} \right)$$

$$- \left| \sqrt{2 \cdot \left| r_{Nref} \right| \cdot \frac{2 \cdot |r_2| \cdot 1.3 - 1.3^2}{2 \cdot \left( \left| r_{Nref} \right| - |r_2| + 1.3 \right)} - \left( \frac{2 \cdot |r_2| \cdot 1.3 - 1.3^2}{2 \cdot \left( \left| r_{Nref} \right| - |r_2| + 1.3 \right)} \right)^2} \, \right|$$

$$\cdot \left( |r_2| - \left( 1.3 + \frac{2 \cdot |r_2| \cdot 1.3 - 1.3^2}{2 \cdot \left( \left| r_{Nref} \right| - |r_2| + 1.3 \right)} \right) \right)$$

$$- \left| r_{Nref} \right|^2$$

$$\cdot \, arcsin \left( \frac{\left| \sqrt{2 \cdot \left| r_{Nref} \right| \cdot \frac{2 \cdot |r_2| \cdot 1.3 - 1.3^2}{2 \cdot \left( \left| r_{Nref} \right| - |r_2| + 1.3 \right)} - \left( \frac{2 \cdot |r_2| \cdot 1.3 - 1.3^2}{2 \cdot \left( \left| r_{Nref} \right| - |r_2| + 1.3 \right)} \right)^2} \right|}{|r_1|} \right)$$

$$- \left| \sqrt{2 \cdot \left| r_{Nref} \right| \cdot \frac{2 \cdot |r_2| \cdot 1.3 - 1.3^2}{2 \cdot \left( \left| r_{Nref} \right| - |r_2| + 1.3 \right)} - \left( \frac{2 \cdot |r_2| \cdot 1.3 - 1.3^2}{2 \cdot \left( \left| r_{Nref} \right| - |r_2| + 1.3 \right)} \right)^2} \right|$$

$$\cdot \left( \left| r_{Nref} \right| - \frac{2 \cdot |r_2| \cdot 1.3 - 1.3^2}{2 \cdot \left( \left| r_{Nref} \right| - |r_2| + 1.3 \right)} \right)$$

without violating the side conditions

$$\pi \geq N_{ref} \cdot arcsin \left( \frac{\sqrt{2 \cdot \left| r_{Nref} \right| \cdot \left( \frac{2 \cdot |r_2| \cdot 1.3 - 1.3^2}{2 \cdot \left( \left| r_{Nref} \right| - |r_2| + 1.3 \right)} - \left( \frac{2 \cdot |r_2| \cdot 1.3 - 1.3^2}{2 \cdot \left( \left| r_{Nref} \right| - |r_2| + 1.3 \right)} \right)^2 \right)}}{\left| r_{Nref} \right|} \right), \quad r_{Nref} < r_{eqv}$$

and wherein the equivalence diameter $D_{eqv}$ results from the relationship $D_{eqv} = 2 r_{eqv}$, wherein the inner surface of the tube is cylinder-shaped and the grooves are introduced into this cylinder-shaped inner surface so that parts of the inner surface remain between the grooves which form parts of a cylinder.

2.  A tube for the thermal splitting of hydrocarbons in the presence of vapour, wherein the feed mixture is guided through tubes heated from the outside, wherein

• the tube (1) extends along a longitudinal axis (A) and has a number $N_T$ of grooves (2) introduced into the inner surface of the tube (1) and extending helically about the longitudinal axis (A) along the inner surface,
• the inner surface into which the grooves (2) were introduced has a diameter Di measured in millimetres and a radius $r_1$ = Di/2 measured in millimetres in a cross-section perpendicular to the longitudinal axis (A),
• the grooves (2) in the cross-section perpendicular to the longitudinal axis (A) respectively have the shape of a circular arc in their groove base (4) and the circular arc has a radius $r_2$ measured in millimetres,
the grooves (2) respectively have a groove depth TT, which, in the cross-section perpendicular to the longitudinal axis (A), respectively corresponds to the smallest distance between the circle with the diameter Di on which the inner surface lies and whose centre point lies on the longitudinal axis (A), and the most distant point of the groove base (4) of the groove (2) from the longitudinal axis (A), **characterised in that**
the numerical value $|D_{eqv}|$ of an equivalence diameter $D_{eqv}$ and the number $N_T$ of the grooves (2) and the numerical value $|TT|$ of the groove depth TT of the grooves (2) measured in mm fulfil the relationship

$$P1 * |D_{eqv}|^2 + P2 * |D_{eqv}| + P3$$

$$=$$

$$C1 + C2 * |TT| + C3 * VD + C4 * |D_{eqv}|$$

$$+ (|TT| - C5) * (VD - C6) * C7$$

$$+ (|TT| - C5) * (|D_{eqv}| - C8) * C9$$

$$+ (VD - C6) * (|D_{eqv}| - C8) * C10$$

$$+ (|D_{eqv}| - C8) * (|D_{eqv}| - C8) * C11$$

with the constants

C1 = 1946,066
C2 = 302,378
C3 = -2,178
C4 = 266,002
C5 = 1,954
C6 = 50,495
C7 = -2,004
C8 = 79,732
C9 = -1,041
C10 = 0,04631

C11 =-0,26550
-0,2 ≥ P1 ≥ -0,3
310 ≤ P2 ≤ 315
200 ≤ P3 ≤ 1500,

wherein the groove density VD which describes the relation of the grooves $N_T$ of the tube in relation to the reference number $N_{ref}$ of the grooves which can be brought in on the inner surface of a tube with the same equivalence diameter $D_{eqv}$ at maximum, with a groove depth TT = 1.3 mm, in percent, results from the following relationship:

$$VD = N_T/N_{ref} * 100$$

and the reference number $N_{ref}$ is the largest natural number which fulfils the relationship

$$N_{ref} \leq \cfrac{\pi}{arcsin\left(\cfrac{\sqrt{2\cdot|r_{eqv}|\cdot\cfrac{2\cdot|r_2|\cdot 1.3 - 1.3^2}{2\cdot(|r_{eqv}| - |r_2| + 1.3)} - \left(\cfrac{2\cdot|r_2|\cdot 1.3 - 1.3^2}{2\cdot(|r_{eqv}| - |r_2| + 1.3)}\right)^2}}{|r_{eqv}|}\right)}$$

wherein

$$A_1 = \pi \cdot |r_1|^2$$

$$A_T = \left[|r_2|\cdot\frac{b_2}{2} - \frac{s\cdot(|r_2| - (|TT| + h))}{2}\right] - \left[|r_1|\cdot\frac{b_1}{2} - \frac{s\cdot(|r_1| - h)}{2}\right]$$

$$b_1 = 2\cdot|r_1|\cdot arcsin\left(\cfrac{\sqrt{2\cdot|r_1|\cdot\cfrac{2\cdot|r_2|\cdot|TT| - |TT|^2}{2\cdot(|r_1| - |r_2| + |TT|)} - \left(\cfrac{2\cdot|r_2|\cdot|TT| - |TT|^2}{2\cdot(|r_1| - |r_2| + |TT|)}\right)^2}}{|r_1|}\right)$$

$$b_2 = 2\cdot|r_2|\cdot arcsin\left(\cfrac{\sqrt{2\cdot|r_1|\cdot\cfrac{2\cdot|r_2|\cdot|TT| - |TT|^2}{2\cdot(|r_1| - |r_2| + |TT|)} - \left(\cfrac{2\cdot|r_2|\cdot|TT| - |TT|^2}{2\cdot(|r_1| - |r_2| + |TT|)}\right)^2}}{|r_2|}\right)$$

$$s = 2 \cdot \left| \sqrt{2 \cdot |r_1| \cdot \frac{2 \cdot |r_2| \cdot |TT| - |TT|^2}{2 \cdot (|r_1| - |r_2| + |TT|)} - \left( \frac{2 \cdot |r_2| \cdot |TT| - |TT|^2}{2 \cdot (|r_1| - |r_2| + |TT|)} \right)^2} \right|$$

$$h = \frac{2 \cdot |r_2| \cdot |TT| - |TT|^2}{2 \cdot (|r_1| - |r_2| + |TT|)}$$

and for which an $r_{Nref}$ exists, which, with recourse to the value for $A_{eqv}$ determined with the foregoing relationship, fulfils the following relationships, whereby $A_{eqv}$ also

$$A_{eqv}$$

$$= \pi \cdot \left| r_{Nref} \right|^2 + N_{ref}$$

$$\cdot \left| \left[ |r_2|^2 \right. \right.$$

$$\cdot \arcsin\left(\frac{\left|\sqrt{2 \cdot |r_{Nref}| \cdot \frac{2 \cdot |r_2| \cdot 1.3 - 1.3^2}{2 \cdot (|r_{Nref}| - |r_2| + 1.3)} - \left(\frac{2 \cdot |r_2| \cdot 1.3 - 1.3^2}{2 \cdot (|r_{Nref}| - |r_2| + 1.3)}\right)^2}\right|}{|r_2|}\right)$$

$$- \left|\sqrt{2 \cdot |r_{Nref}| \cdot \frac{2 \cdot |r_2| \cdot 1.3 - 1.3^2}{2 \cdot (|r_{Nref}| - |r_2| + 1.3)} - \left(\frac{2 \cdot |r_2| \cdot 1.3 - 1.3^2}{2 \cdot (|r_{Nref}| - |r_2| + 1.3)}\right)^2}\right|$$

$$\cdot \left(|r_2| - \left(1.3 + \frac{2 \cdot |r_2| \cdot 1.3 - 1.3^2}{2 \cdot (|r_{Nref}| - |r_2| + 1.3)}\right)\right)$$

$$- \left|r_{Nref}\right|^2$$

$$\cdot \arcsin\left(\frac{\left|\sqrt{2 \cdot |r_{Nref}| \cdot \frac{2 \cdot |r_2| \cdot 1.3 - 1.3^2}{2 \cdot (|r_{Nref}| - |r_2| + 1.3)} - \left(\frac{2 \cdot |r_2| \cdot 1.3 - 1.3^2}{2 \cdot (|r_{Nref}| - |r_2| + 1.3)}\right)^2}\right|}{|r_1|}\right)$$

$$- \left|\sqrt{2 \cdot |r_{Nref}| \cdot \frac{2 \cdot |r_2| \cdot 1.3 - 1.3^2}{2 \cdot (|r_{Nref}| - |r_2| + 1.3)} - \left(\frac{2 \cdot |r_2| \cdot 1.3 - 1.3^2}{2 \cdot (|r_{Nref}| - |r_2| + 1.3)}\right)^2}\right|$$

$$\cdot \left( \left| r_{Nref} \right| - \frac{2 \cdot |r_2| \cdot 1.3 - 1.3^2}{2 \cdot \left( \left| r_{Nref} \right| - |r_2| + 1.3 \right)} \right)$$

without violating the side conditions

$$\pi \geq N_{ref} \cdot arcsin \left( \frac{\sqrt{2 \cdot \left| r_{Nref} \right| - \frac{2 \cdot |r_2| \cdot 1.3 - 1.3^2}{2 \cdot \left( \left| r_{Nref} \right| - |r_2| + 1.3 \right)} - \left( \frac{2 \cdot |r_2| \cdot 1.3 - 1.3^2}{2 \cdot \left( \left| r_{Nref} \right| - |r_2| + 1.3 \right)} \right)^2}}{\left| r_{Nref} \right|} \right), \quad r_{Nref} < r_{eqv}$$

and wherein the equivalence diameter $D_{eqv}$ results from the relationship $D_{eqv} = 2\, r_{eqv}$, wherein the inner surface of the tube is cylinder-shaped and the grooves are introduced into this cylinder-shaped inner surface so that parts of the inner surface remain between the grooves which form parts of a cylinder.

3. The tube according to any one of claims 1 or 2, **characterised in that** the diameter Di of the inner surface into which the grooves (2) were introduced is in a range from 15 mm to 280 mm.

4. The tube according to any one of claims 1 to 3, **characterised in that** the groove depth TT is in a range from 0.1 mm to 10 mm.

5. The tube according to any one of claims 1 to 4, **characterised in that** the number $N_T$ of the grooves (2) results in a groove density which is in a range from 1% to 347%.

6. The tube according to any one of claims 1 to 5, **characterised in that** the grooves (2) run in an angle of 20° to 40°, preferably from 22.5° to 32.5°, with regard to the longitudinal axis (A).

7. The tube according to any one of claims 1 to 6, **characterised in that** the tube is a centrifugally cast tube or was produced from a centrifugally cast tube by introducing grooves into a centrifugally cast tube.

8. The tube according to any one of claims 1 to 7, **characterised in that** the tube has a nickel-chromium-iron alloy with a high oxidation and carburization resistance, creep strength and creep resistance of

   0.05% to 0.6% carbon
   20% to 50% chromium
   5% to 40% iron
   2% to 6% aluminium
   up to 2% silicone
   up to 2% manganese

up to 1.5% niobium
up to 1.5% tantalum
up to 6.0% tungsten
up to 1.0% titanium
up to 1.0% zirconium
up to 0.5% yttrium
up to 0.5% cerium
up to 0.5% molybdenum
up to 0.1% nitrogen
remainder nickel including impurities from the melting process, in particular consists of such an alloy.

9. A device for the thermal splitting of hydrocarbons in the presence of vapour, wherein the feed mixture is guided through tubes heated from the outside, **characterized by** a tube according to any one of claims 1 to 8.

10. Use of a tube according to any one of claims 1 to 8 for the thermal splitting of hydrocarbons in the presence of vapour, wherein the feed mixture is guided through tubes heated from the outside.

**Revendications**

1. Tuyau destiné à la séparation thermique d'hydrocarbures en présence de vapeur, dans lequel le mélange d'alimentation passe dans des tuyaux chauffés extérieurement,

   • le tuyau (1) s'étendant le long d'un axe longitudinal (A) et présentant un certain nombre de rainures (2) $N_T$ pratiquées dans la surface intérieure du tuyau (1) et s'étendant en hélice autour de l'axe longitudinal (A) le long de la surface intérieure,
   • la surface intérieure dans laquelle les rainures (2) ont été pratiquées présentant, dans une section transversale perpendiculaire à l'axe longitudinal (A), un diamètre Di mesuré en millimètres et un rayon $r_1$ = Di/2 mesuré en millimètres,
   • les rainures (2) dans la section transversale perpendiculaire à l'axe longitudinal (A) ayant chacune la forme d'un arc de cercle dans leur fond de rainure (4) et l'arc de cercle ayant un rayon $r_2$ mesuré en millimètres, les rainures (2) présentent chacune une profondeur de rainure TT qui, dans la section transversale perpendiculaire à l'axe longitudinal (A), correspond respectivement à la plus petite distance entre le cercle de diamètre Di sur lequel se trouve la surface intérieure et dont le centre se trouve sur l'axe longitudinal (A), et le point le plus éloigné du fond de rainure (4) de la rainure (2) par rapport à l'axe longitudinal (A), **caractérisé en ce que** la valeur numérique $|D_{Éqv}|$ d'un diamètre d'équivalence $D_{Éqv}$ et le nombre $N_T$ de rainures (2) et la valeur numérique |TT| de la profondeur de rainure TT des rainures (2), mesurée en mm, satisfont à la relation

$$P1 * |D_{Éqv}|^2 + P2 * |D_{Éqv}| + P3$$

$$=$$

$$C1 + C2 * |TT| + C3 * VD + C4 * |D_{Éqv}|$$

$$+ (|TT| - C5) * (VD - C6) * C7$$

$$+ (|TT| - C5) * (|D_{Éqv}| - C8) * C9$$

avec les constantes

C1 = 1946,066
C2 = 302,378
C3 = -2,178
C4 = 266,002
C5 = 1,954
C6 = 50,495
C7 = -2,004
C8 = 79,732

C9 = -1,041
-0,2 ≥ P1 ≥ -0,3
310 ≤ P2 ≤ 315
200 ≤ P3 ≤ 1500,

la densité de rainures VD, qui décrit le rapport des rainures $N_T$ du tuyau par rapport au nombre de référence $N_{réf}$ des rainures maximales pouvant être pratiquées sur la surface intérieure d'un tuyau de même diamètre d'équivalence $D_{Éqv}$ avec une profondeur de rainure TT = 1,3 mm, étant obtenue à partir de la relation suivante :

$$VD = N_T/N_{réf} * 100$$

et **que** le nombre de référence $N_{réf}$ est le plus grand nombre naturel qui satisfait à la relation

$$N_{réf} \leq \frac{\pi}{arcsin\left(\frac{\left|\sqrt{2 \cdot |r_{Éqv}| \cdot \frac{2 \cdot |r_2| \cdot 1,3 - 1,3^2}{2 \cdot (|r_{Éqv}| - |r_2| + 1,3)} - \left(\frac{2 \cdot |r_2| \cdot 1,3 - 1,3^2}{2 \cdot (|r_{Éqv}| - |r_2| + 1,3)}\right)^2}\right|}{|r_{Éqv,}|}\right)}$$

, dans laquelle

$$|r_{Éqv}| = \left|\sqrt{\frac{|A_{Éqv}|}{\pi}}\right|$$

$$A_{Éqv} = A_1 + N_T \cdot A_T$$

$$A_1 = \pi \cdot |r_1|^2$$

$$A_T = \left[|r_2| \cdot \frac{b_2}{2} - \frac{s \cdot (|r_2| - (|TT| + h))}{2}\right] - \left[|r_1| \cdot \frac{b_1}{2} - \frac{s \cdot (|r_1| - h)}{2}\right]$$

$$b_1 = 2 \cdot |r_1| \cdot arcsin\left(\frac{\left|\sqrt{2 \cdot |r_1| \cdot \frac{2 \cdot |r_2| \cdot |TT| - |TT|^2}{2 \cdot (|r_1| - |r_2| + |TT|)} - \left(\frac{2 \cdot |r_2| \cdot |TT| - |TT|^2}{2 \cdot (|r_1| - |r_2| + |TT|)}\right)^2}\right|}{|r_1|}\right)$$

$$b_2 = 2 \cdot |r_2| \cdot arcsin \left( \frac{\left| \sqrt{2 \cdot |r_1| \cdot \frac{2 \cdot |r_2| \cdot |TT| - |TT|^2}{2 \cdot (|r_1| - |r_2| + |TT|)} - \left( \frac{2 \cdot |r_2| \cdot |TT| - |TT|^2}{2 \cdot (|r_1| - |r_2| + |TT|)} \right)^2} \right|}{|r_2|} \right)$$

$$s = 2 \cdot \left| \sqrt{2 \cdot |r_1| \cdot \frac{2 \cdot |r_2| \cdot |TT| - |TT|^2}{2 \cdot (|r_1| - |r_2| + |TT|)} - \left( \frac{2 \cdot |r_2| \cdot |TT| - |TT|^2}{2 \cdot (|r_1| - |r_2| + |TT|)} \right)^2} \right|$$

$$h = \frac{2 \cdot |r_2| \cdot |TT| - |TT|^2}{2 \cdot (|r_1| - |r_2| + |TT|)}$$

et pour laquelle il existe une $r_{Nréf}$ qui, en se référant à la valeur déterminée par la relation précédente pour $A_{Éqv}$ satisfait aux relations suivantes, selon lesquelles $A_{Éqv}$ est également

$$A_{\acute{E}qv}$$

$$= \pi \cdot \left| r_{Nr\acute{e}f} \right|^2 + N_{r\acute{e}f}$$

$$\cdot \left[\left[ |r_2|^2 \right.\right.$$

$$\cdot \, arcsin \left( \frac{\left| \sqrt{2 \cdot \left| r_{Nr\acute{e}f} \right| \cdot \dfrac{2 \cdot |r_2| \cdot 1{,}3 - 1{,}3^2}{2 \cdot \left( \left| r_{Nr\acute{e}f} \right| - |r_2| + 1{,}3 \right)} - \left( \dfrac{2 \cdot |r_2| \cdot 1{,}3 - 1{,}3^2}{2 \cdot \left( \left| r_{Nr\acute{e}f} \right| - |r_2| + 1{,}3 \right)} \right)^2} \right|}{|r_2|} \right)$$

$$- \left| \sqrt{2 \cdot \left| r_{Nr\acute{e}f} \right| \cdot \frac{2 \cdot |r_2| \cdot 1{,}3 - 1{,}3^2}{2 \cdot \left( \left| r_{Nr\acute{e}f} \right| - |r_2| + 1{,}3 \right)} - \left( \frac{2 \cdot |r_2| \cdot 1{,}3 - 1{,}3^2}{2 \cdot \left( \left| r_{Nr\acute{e}f} \right| - |r_2| + 1{,}3 \right)} \right)^2} \right|$$

$$\left| r_{eqv} \right| = \left| \sqrt{\frac{\left| A_{eqv} \right|}{\pi}} \right|$$

$$A_{eqv} = A_1 + N_T \cdot A_T$$

$$\cdot \left( |r_2| - \left( 1{,}3 + \frac{2 \cdot |r_2| \cdot 1{,}3 - 1{,}3^2}{2 \cdot \left( \left| r_{Nréf} \right| - |r_2| + 1{,}3 \right)} \right) \right)$$

$$- \left| r_{Nréf} \right|^2$$

$$\cdot \, arcsin \left( \frac{\left| \sqrt{2 \cdot \left| r_{Nréf} \right| \cdot \frac{2 \cdot |r_2| \cdot 1{,}3 - 1{,}3^2}{2 \cdot \left( \left| r_{Nréf} \right| - |r_2| + 1{,}3 \right)} - \left( \frac{2 \cdot |r_2| \cdot 1{,}3 - 1{,}3^2}{2 \cdot \left( \left| r_{Nréf} \right| - |r_2| + 1{,}3 \right)} \right)^2} \right|}{|r_1|} \right)$$

$$- \left| \sqrt{2 \cdot \left| r_{Nréf} \right| \cdot \frac{2 \cdot |r_2| \cdot 1{,}3 - 1{,}3^2}{2 \cdot \left( \left| r_{Nréf} \right| - |r_2| + 1{,}3 \right)} - \left( \frac{2 \cdot |r_2| \cdot 1{,}3 - 1{,}3^2}{2 \cdot \left( \left| r_{Nréf} \right| - |r_2| + 1{,}3 \right)} \right)^2} \right|$$

$$\cdot \left( \left| r_{Nréf} \right| - \frac{2 \cdot |r_2| \cdot 1{,}3 - 1{,}3^2}{2 \cdot \left( \left| r_{Nréf} \right| - |r_2| + 1{,}3 \right)} \right)$$

sans enfreindre les conditions secondaires

$$\pi \geq N_{r\acute{e}f} \cdot arcsin\left(\frac{\sqrt{2 \cdot |r_{Nr\acute{e}f}| \cdot \frac{2 \cdot |r_2| \cdot 1{,}3 - 1{,}3^2}{2 \cdot (|r_{Nr\acute{e}f}| - |r_2| + 1{,}3)} - \left(\frac{2 \cdot |r_2| \cdot 1{,}3 - 1{,}3^2}{2 \cdot (|r_{Nr\acute{e}f}| - |r_2| + 1{,}3)}\right)^2}}{|r_{Nr\acute{e}f}|}\right), \quad r_{Nr\acute{e}f} < r_{\acute{E}qv}$$

et le diamètre d'équivalence $D_{\acute{E}qv}$ résultant de la relation $D_{\acute{E}qv} = 2 \, r_{\acute{E}qv}$, la surface intérieure du tuyau étant cylindrique et les rainures étant pratiquées dans cette surface intérieure cylindrique, de sorte qu'il reste entre les rainures des parties de la surface intérieure qui forment des parties d'un cylindre.

2. Tuyau destiné à la séparation thermique d'hydrocarbures en présence de vapeur, dans lequel le mélange d'alimentation passe dans des tuyaux chauffés extérieurement,

• le tuyau (1) s'étendant le long d'un axe longitudinal (A) et comportant un nombre $N_T$ de rainures (2) pratiquées dans la surface intérieure du tuyau (1) et s'étendant en hélice autour de l'axe longitudinal (A) le long de la surface intérieure,
• la surface intérieure dans laquelle les rainures (2) ont été pratiquées présentant, dans une section transversale perpendiculaire à l'axe longitudinal (A), un diamètre Di mesuré en millimètres et un rayon $r_1 = Di/2$ mesuré en millimètres,
• les rainures (2) ayant chacune la forme d'un arc de cercle dans la section transversale perpendiculaire à l'axe longitudinal (A) dans leur fond de rainure (4) et l'arc de cercle ayant un rayon $r_2$ mesuré en millimètres,
les rainures (2) présentent chacune une profondeur de rainure TT qui, dans la section transversale perpendiculaire à l'axe longitudinal (A), correspond respectivement à la plus petite distance entre le cercle de diamètre Di sur lequel se trouve la surface intérieure et dont le centre se trouve sur l'axe longitudinal (A), et le point le plus éloigné du fond de rainure (4) de la rainure (2) par rapport à l'axe longitudinal (A), **caractérisé en ce que** la valeur numérique $|D_{\acute{E}qv}|$ d'un diamètre d'équivalence $D_{\acute{E}qv}$ et le nombre $N_T$ de rainures (2) et la valeur numérique $|TT|$ de la profondeur de rainure TT des rainures (2), mesurée en mm, satisfont à la relation

$$P1 * |D_{\acute{E}qv}|^2 + P2 * |D_{\acute{E}qv}| + P3$$
$$=$$
$$C1 + C2 * |TT| + C3 * VD + C4 * |D_{\acute{E}qv}|$$
$$+ (|TT| - C5) * (VD - C6) * C7$$
$$+ (|TT| - C5) * (|D_{\acute{E}qv}| - C8) * C9$$
$$+ (VD - C6) * (|D_{\acute{E}qv}| - C8) * C10$$
$$+ (|D_{\acute{E}qv}| - C8) * (|D_{\acute{E}qv}| - C8) * C11$$

avec les constantes

C1 = 1946,066
C2 = 302,378
C3 = -2,178
C4 = 266,002
C5 = 1,954
C6 = 50,495
C7 = -2,004

C8 = 79,732
C9 = -1,041
C10 = 0,04631
C11 =-0,26550
-0,2 ≥ P1 ≥ -0,3
310 ≤ P2 ≤ 315
200 ≤ P3 ≤ 1500,

dans laquelle la densité de rainures VD, qui décrit le rapport des rainures $N_T$ du tuyau par rapport au nombre de référence $N_{réf}$ des rainures maximales pouvant être pratiquées sur la surface intérieure d'un tuyau de même diamètre d'équivalence $D_{Éqv}$ avec une profondeur de rainure TT = 1,3 mm, étant obtenue à partir de la relation suivante :

$$VD = N_T/N_{réf} * 100$$

et **que** le nombre de référence $N_{réf}$ est le plus grand nombre naturel qui satisfait à la relation

$$N_{réf} \leq \frac{\pi}{arcsin\left(\frac{\sqrt{2 \cdot |r_{Éqv}| \cdot \frac{2 \cdot |r_2| \cdot 1,3 - 1,3^2}{2 \cdot (|r_{Éqv}| - |r_2| + 1,3)} - \left(\frac{2 \cdot |r_2| \cdot 1,3 - 1,3^2}{2 \cdot (|r_{Éqv}| - |r_2| + 1,3)}\right)^2}}{|r_{Éqv,}|}\right)}$$

, dans laquelle

$$|r_{Éqv}| = \left|\sqrt{\frac{|A_{Éqv}|}{\pi}}\right|$$

$$A_{Éqv} = A_1 + N_T \cdot A_T$$

$$A_1 = \pi \cdot |r_1|^2$$

$$A_T = \left[|r_2| \cdot \frac{b_2}{2} - \frac{s \cdot (|r_2| - (|TT| + h))}{2}\right] - \left[|r_1| \cdot \frac{b_1}{2} - \frac{s \cdot (|r_1| - h)}{2}\right]$$

$$b_1 = 2 \cdot |r_1| \cdot arcsin \left( \frac{\left| \sqrt{2 \cdot |r_1| \cdot \frac{2 \cdot |r_2| \cdot |TT| - |TT|^2}{2 \cdot (|r_1| - |r_2| + |TT|)} - \left( \frac{2 \cdot |r_2| \cdot |TT| - |TT|^2}{2 \cdot (|r_1| - |r_2| + |TT|)} \right)^2} \right|}{|r_1|} \right)$$

$$b_2 = 2 \cdot |r_2| \cdot arcsin \left( \frac{\left| \sqrt{2 \cdot |r_1| \cdot \frac{2 \cdot |r_2| \cdot |TT| - |TT|^2}{2 \cdot (|r_1| - |r_2| + |TT|)} - \left( \frac{2 \cdot |r_2| \cdot |TT| - |TT|^2}{2 \cdot (|r_1| - |r_2| + |TT|)} \right)^2} \right|}{|r_2|} \right)$$

$$s = 2 \cdot \left| \sqrt{2 \cdot |r_1| \cdot \frac{2 \cdot |r_2| \cdot |TT| - |TT|^2}{2 \cdot (|r_1| - |r_2| + |TT|)} - \left( \frac{2 \cdot |r_2| \cdot |TT| - |TT|^2}{2 \cdot (|r_1| - |r_2| + |TT|)} \right)^2} \right|$$

$$h = \frac{2 \cdot |r_2| \cdot |TT| - |TT|^2}{2 \cdot (|r_1| - |r_2| + |TT|)}$$

et pour laquelle il existe un $r_{Nréf}$ qui, en utilisant la valeur de $A_{Éqv}$ déterminée par la relation précédente, satisfait aux relations suivantes, selon lesquelles $A_{Éqv}$ est également

$$A_{Éqv} = \pi \cdot \left| r_{Nréf} \right|^2 + N_{réf} \cdot \left[ \left[ |r_2|^2 \right. \right.$$

$$\cdot\, arcsin\left(\frac{\left|\sqrt{2\cdot\left|r_{N r\acute{e}f}\right|\cdot\dfrac{2\cdot|r_2|\cdot 1{,}3-1{,}3^2}{2\cdot\left(\left|r_{N r\acute{e}f}\right|-|r_2|+1{,}3\right)}-\left(\dfrac{2\cdot|r_2|\cdot 1{,}3-1{,}3^2}{2\cdot\left(\left|r_{N r\acute{e}f}\right|-|r_2|+1{,}3\right)}\right)^2}\right|}{|r_2|}\right)$$

$$-\left|\sqrt{2\cdot\left|r_{N r\acute{e}f}\right|\cdot\frac{2\cdot|r_2|\cdot 1{,}3-1{,}3^2}{2\cdot\left(\left|r_{N r\acute{e}f}\right|-|r_2|+1{,}3\right)}-\left(\frac{2\cdot|r_2|\cdot 1{,}3-1{,}3^2}{2\cdot\left(\left|r_{N r\acute{e}f}\right|-|r_2|+1{,}3\right)}\right)^2}\right.$$

$$\left.\cdot\left(|r_2|-\left(1{,}3+\frac{2\cdot|r_2|\cdot 1{,}3-1{,}3^2}{2\cdot\left(\left|r_{N r\acute{e}f}\right|-|r_2|+1{,}3\right)}\right)\right)\right|$$

$$-\left|\left|r_{N r\acute{e}f}\right|^2\right.$$

$$\cdot\, arcsin\left(\frac{\left|\sqrt{2\cdot\left|r_{N r\acute{e}f}\right|\cdot\dfrac{2\cdot|r_2|\cdot 1{,}3-1{,}3^2}{2\cdot\left(\left|r_{N r\acute{e}f}\right|-|r_2|+1{,}3\right)}-\left(\dfrac{2\cdot|r_2|\cdot 1{,}3-1{,}3^2}{2\cdot\left(\left|r_{N r\acute{e}f}\right|-|r_2|+1{,}3\right)}\right)^2}\right|}{|r_1|}\right)$$

$$-\left|\sqrt{2\cdot\left|r_{N r\acute{e}f}\right|\cdot\frac{2\cdot|r_2|\cdot 1{,}3-1{,}3^2}{2\cdot\left(\left|r_{N r\acute{e}f}\right|-|r_2|+1{,}3\right)}-\left(\frac{2\cdot|r_2|\cdot 1{,}3-1{,}3^2}{2\cdot\left(\left|r_{N r\acute{e}f}\right|-|r_2|+1{,}3\right)}\right)^2}\right.$$

$$\cdot \left( \left| r_{Nréf} \right| - \frac{2 \cdot |r_2| \cdot 1{,}3 - 1{,}3^2}{2 \cdot \left( \left| r_{Nréf} \right| - |r_2| + 1{,}3 \right)} \right)$$

sans enfreindre les conditions secondaires

$$\pi \geq N_{réf} \cdot arcsin \left( \frac{\sqrt{2 \cdot \left| r_{Nréf} \right| \cdot \frac{2 \cdot |r_2| \cdot 1{,}3 - 1{,}3^2}{2 \cdot \left( \left| r_{Nréf} \right| - |r_2| + 1{,}3 \right)} - \left( \frac{2 \cdot |r_2| \cdot 1{,}3 - 1{,}3^2}{2 \cdot \left( \left| r_{Nréf} \right| - |r_2| + 1{,}3 \right)} \right)^2}}{\left| r_{Nréf} \right|} \right), \quad r_{Nréf} < r_{Éqv}$$

et le diamètre d'équivalence $D_{Éqv}$ résultant de la relation $D_{Éqv} = 2\, r_{Éqv}$, la surface intérieure du tuyau étant cylindrique et les rainures étant pratiquées dans cette surface intérieure cylindrique, de sorte qu'il reste entre les rainures des parties de la surface intérieure qui forment des parties d'un cylindre.

3. Tuyau selon la revendication 1 ou 2, **caractérisé en ce que** le diamètre Di de la surface intérieure dans laquelle les rainures (2) ont été pratiquées se situe dans une plage de 15 mm à 280 mm.

4. Tuyau selon l'une des revendications 1 à 3, **caractérisé en ce que** la profondeur de rainure TT se situe dans une plage de 0,1 mm à 10 mm.

5. Tuyau selon l'une des revendications 1 à 4, **caractérisé en ce que** le nombre $N_T$ de rainures (2) entraîne une densité de rainures qui se situe dans une plage de 1 % à 347 %.

6. Tuyau selon l'une des revendications 1 à 5, **caractérisé en ce que** les rainures (2) s'étendent selon un angle de 20° à 40°, de préférence de 22,5° à 32,5°, par rapport à l'axe longitudinal (A).

7. Tuyau selon l'une des revendications 1 à 6, **caractérisé en ce que** le tuyau est un tuyau coulé par centrifugation ou a été fabriqué à partir d'un tuyau coulé par centrifugation en pratiquant des rainures dans un tuyau coulé par centrifugation.

8. Tuyau selon l'une des revendications 1 à 7, **caractérisé en ce que** le tuyau est un alliage nickel-chrome-fer présentant une résistance élevée à l'oxydation et à la carburation, une résistance aux efforts répétés et une résistance au fluage, constitué de

0,05 % à 0,6 % de carbone
20 % à 50 % de chrome
5 % à 40% de fer
2% à 6 % d'aluminium

jusqu'à 2 % de silicium
jusqu'à 2 % de manganèse
jusqu'à 1,5 % de niobium
jusqu'à 1,5 % de tantale
jusqu'à 6,0 % de tungstène
jusqu'à 1,0 % de titane
jusqu'à 1,0 % de zirconium
jusqu'à 0,5 % d'yttrium
jusqu'à 0,5 % de cérium
jusqu'à 0,5 % de molybdène
jusqu'à 0,1 % d'azote
le reste étant du nickel, y compris des impuretés dues à l'élaboration, en particulier est constitué d'un tel alliage.

9. Dispositif destiné à la séparation thermique d'hydrocarbures en présence de vapeur, dans lequel le mélange d'alimentation passe dans des tuyaux chauffés extérieurement, **caractérisé par** un tuyau selon l'une quelconque des revendications 1 à 8.

10. Utilisation d'un tuyau selon l'une quelconque des revendications 1 à 8 destinée à la séparation thermique d'hydrocarbures en présence de vapeur, pendant laquelle le mélange d'alimentation passe dans des tuyaux chauffés extérieurement.

Fig. 1

Fig. 2

Fig. 3

Fig. 4

Detail Y

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 969796 A
- EP 1136541 A1
- US 5950718 A
- EP 1525289 B9
- WO 2010043375 A1
- DE 102016012907
- DE 19523280